(19) **Europäisches Patentamt / European Patent Office / Office européen des brevets**

(11) **EP 3 304 025 B1**

(12) **EUROPÄISCHE PATENTSCHRIFT**

(45) Veröffentlichungstag und Bekanntmachung des Hinweises auf die Patenterteilung:
**24.11.2021 Patentblatt 2021/47**

(51) Int Cl.:
***G01M 11/02*** *(2006.01)*

(21) Anmeldenummer: **16711631.8**

(86) Internationale Anmeldenummer:
**PCT/EP2016/056367**

(22) Anmeldetag: **23.03.2016**

(87) Internationale Veröffentlichungsnummer:
**WO 2016/192869 (08.12.2016 Gazette 2016/49)**

(54) **VERFAHREN UND VORRICHTUNG ZUM BESTIMMEN VON OBERFLÄCHENDATEN UND/ODER MESSDATEN EINER OBERFLÄCHE EINES ZUMINDEST TEILWEISE TRANSPARENTEN OBJEKTS**

METHOD AND APPARATUS FOR DETERMINING SURFACE DATA AND/OR MEASUREMENT DATA RELATING TO A SURFACE OF AN AT LEAST PARTIALLY TRANSPARENT OBJECT

PROCÉDÉ ET DISPOSITIF DE DÉTERMINATION DE DONNÉES DE SURFACE ET/OU DE DONNÉES DE MESURE D'UNE SURFACE D'UN OBJET AU MOINS PARTIELLEMENT TRANSPARENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2015 DE 102015108839**

(43) Veröffentlichungstag der Anmeldung:
**11.04.2018 Patentblatt 2018/15**

(73) Patentinhaber: **Rodenstock GmbH**
**80687 München (DE)**

(72) Erfinder:
• **TRUMM, Stephan**
**80999 München (DE)**

• **SESSNER, Rainer**
**91154 Roth (DE)**
• **UTTENWEILER, Dietmar**
**82057 Icking (DE)**

(74) Vertreter: **Kaufmann, Ursula Josefine**
**RPK Patentanwälte**
**Reinhardt, Pohlmann und Kaufmann**
**Partnerschaft mbB**
**Gaisburgstrasse 21**
**70182 Stuttgart (DE)**

(56) Entgegenhaltungen:
**WO-A1-2008/098293    WO-A1-2014/019806**
**DE-A1-102011 078 833    US-A1- 2001 001 572**
**US-A1- 2009 161 114    US-B1- 7 688 431**

## Beschreibung

## Stand der Technik

Die Erfindung betrifft ein Verfahren gemäß Anspruch 1 zum Bestimmen von Oberflächendaten und/oder Messdaten einer Oberfläche eines zumindest teilweise transparenten Objekts, insbesondere eines Brillenglases, sowie eine Vorrichtung gemäß Anspruch 13 zum Bestimmen von Oberflächendaten und/oder Messdaten einer Oberfläche und ein Computerprogrammprodukt gemäß Anspruch 17 zum Bestimmen von Oberflächendaten und/oder Messdaten einer Oberfläche.

In den letzten Jahren hat die Freiformtechnik Einzug in die optische Industrie gehalten. Im Bereich der Brillengläser sind dies beispielsweise individuell optimierte Gläser. Die Möglichkeit, Freiformflächen zu produzieren, hat aber auch die Notwendigkeit nach sich gezogen, optische Oberflächen schnell und zuverlässig, ganzflächig und zerstörungsfrei zu messen. Dabei werden in der Qualitätssicherung Oberflächendaten bestimmt. Die Oberflächendaten können beispielsweise Höhendaten und/oder Neigungsdaten und/oder Krümmungsdaten der Oberflächen umfassen.

Einen Ansatz stellt der Einsatz der optischen Ganzflächenmesstechnik zur Bestimmung von Oberflächendaten dar. Da die Oberflächen von Gläsern Licht nicht streuen, sondern reflektieren, versagen hier konventionelle Methoden. Stattdessen bedient man sich einer als Deflektometrie (oder Reflektometrie) bezeichneten Technik. Dabei wird ein Muster auf ein Messobjekt eingestrahlt und das an dem Messobjekt reflektierte Bild dieses Musters aufgenommen.

Dabei werden Koordinaten aus der Projektion (z.B. Pixelkoordinaten eines Projektors) Koordinaten der Aufnahme zugeordnet (z.B. Pixelkoordinaten einer Kamera). Sind die Geometrie von Projektor und Kamera bekannt, kann daraus auf die reflektierende Oberfläche geschlossen werden.

Man unterscheidet prinzipiell zwischen als "ganzflächig" bezeichneten Verfahren und Verfahren, die mit diskreten Mustern arbeiten. Bei ganzflächigen Verfahren werden ganzflächige Muster (üblicherweise verschiedene Streifenmuster mit sinusförmigem Intensitätsverlauf) nacheinander eingestrahlt und jeder Bildpunkt der Kamera individuell ausgewertet. Verfahren mit diskreten Strukturen sind auch als Hartmann-artige Verfahren bekannt. Bei ihnen werden diskrete Objekte (im einfachsten Fall Punkte) auf die Oberfläche des Objekts eingestrahlt, deren Position im Bild der Kamera über Bildverarbeitung bestimmt und deren Koordinaten ausgewertet.

Bei der Analyse von an transparenten Objekten reflektierten Lichtintensitäten können Mehrdeutigkeiten auftreten. Ein definierter Punkt der Beleuchtungseinrichtung kann nämlich auf unterschiedlichen Wegen in ein und denselben Pixel der Kamera abgebildet werden, weil der Strahlengang das Resultat der Position der Reflexion und der Richtung der spiegelnden Oberfläche im Raum ist.

Es sind verschiedene Wege bekannt, diese Mehrdeutigkeit aufzulösen und Oberflächendaten zu berechnen. Die dazu nötigen Verfahren sind im Detail beispielsweise in folgenden Schriften beschrieben: D. Malacara, Optical Shop Testing, Wiley Interscience 1992; H. Gross, B. Dörband (Autor), H. Müller, Non Interferometric Wavefront Sensing, in Metrology of Optical Components and Systems, Kapitel 47, Band 5, Handbook of Optical Systems, (H. Gross (Hrsg.)), Wiley-VCH, 2012; Stereodeflektometrie (DE 10 2004 020 419 B3); Richtungskodierte Deflektometrie (DE 1 00 14 964 C2); Brillenglasqualitätskontrolle (EP 2 799 832 A2).

All diesen Verfahren ist jedoch gemein, dass das eingestrahlte Muster bei transparenten Prüflingen sowohl auf der Vorderfläche als auch auf der Rückfläche des zu vermessenden Objekts reflektiert wird. Beide Bilder überlagern sich in der Kamera, so dass eine eindeutige Auswertung erschwert ist.

Die EP 2 799 832 A2 beschreibt ein Verfahren für die Qualitätskontrolle eines Brillenglases, bei dem zunächst die Topografie von einer optisch wirksamen Oberfläche des Brillenglases ermittelt wird, dann lokale Istwerte I[X,V] von einer optischen Größe des Brillenglases unter Berücksichtigung der ermittelten Topographie berechnet werden, im Anschluss daran lokale Abweichungen F[X,V] der berechneten lokalen Istwerte I[X,V] von lokalen Sollwerten S[X,V] für die wenigstens eine optische Größe des Brillenglases berechnet werden, dann ein Qualitätsmaß Q für das Brillenglas ermittelt wird, indem die berechneten lokalen Abweichungen F[X,V] ausgewertet werden, und dann das ermittelte Qualitätsmaß Q nach einer Qualitätsvorschrift bewertet wird.

Die DE 102011078833 A1 offenbart, eine innerhalb der Linse angeordnete Markierung als Positionierhilfe zu verwenden und Licht, das durch die Linse durchgestrahlt und an einem externen Reflektor (Retroreflektor) reflektiert wird, zu untersuchen. Durch eine homogene Ausleuchtung des Objekts kann die Markierung im Objekt sichtbar gemacht werden.

Die US 7688431 B1 beschäftigt sich mit den Dispersionseigenschaften einer Linse. Dabei wird eine Testlinse mit einem Muster durchstrahlt, wobei kurzwelligeres und langwelligeres Licht eingesetzt wird. Das durch die Testlinse transmittierte Muster wird auf einem Display dargestellt.

In der WO 2008/098293 A1 werden die optischen Eigenschaften von Linsen untersucht, wobei verschiedene Spots der Linsen durchstrahlt werden und die laterale Position jedes dadurch erzeugten Lichtstrahls in verschiedenen Abständen bestimmt werden. Daraus werden Eigenschaften des optischen Systems abgeleitet.

In der US 2009/161114 A1 werden die Brechungseigenschaften einer Linse mit theoretischem Brechungsindex bestimmt, die in einem Medium mit nahezu gleichem Brechungsindex in einem Strahlengang durchleuchtet wird. Die Linse wird in Bereichen unter Druck gesetzt und das Interferenzmuster der Bereiche mit und ohne Druck verglichen. Zur Untersuchung wird polarisiertes Licht verwendet.

Die US 2001/001572 A1 offenbart ebenso eine Vorrichtung, in der eine Linse durchstrahlt wird und die spektrale Transmission und Brechungseigenschaften über die Linse bestimmt werden.

In der WO 2014/019806 A1 werden die geometrischen Eigenschaften einer Kunststofflinse untersucht, die mit einer ersten Wellenlänge gepulst bestrahlt wird und die Licht einer anderen Wellenlänge, z.B. im Bereich von 400 nm, emittiert. Das Licht wird mit einem aufgefächerten Lichtstrahl senkrecht eingestrahlt und das emittierte Licht unter einem Winkel dazu, z.B. 85°, aufgefangen. Es wird mit dem emittierten Licht ein Abbild der Oberfläche erzeugt und analysiert. Dabei wird das Abbild mit Referenzdaten verglichen, die für eine gegebene Geometrie der Oberfläche spezifisch sind. Das Verfahren kann automatisiert durchgeführt werden, wobei beide Oberflächen der Linse gleichzeitig untersucht werden können.

## Offenbarung der Erfindung

Die Aufgabe der Erfindung ist es, ein Verfahren zu schaffen, welches es erlaubt, insbesondere zur Qualitätssicherung Oberflächendaten und/oder Messdaten einer Oberfläche von transparenten Objekten wie Brillengläsern einfach und zuverlässig zu bestimmen.

Eine weitere Aufgabe der Erfindung ist es, eine Vorrichtung zu schaffen, welches es erlaubt, insbesondere zur Qualitätssicherung Oberflächendaten und/oder Messdaten einer Oberfläche von transparenten Objekten wie Brillengläsern einfach und zuverlässig zu bestimmen.

Die Aufgaben werden durch die Merkmale der unabhängigen Ansprüche 1, 13 und 17 gelöst. Günstige Ausgestaltungen und Vorteile der Erfindung ergeben sich aus den weiteren Ansprüchen, der Beschreibung und den Zeichnungen.

Es wird ein Verfahren vorgeschlagen zum Bestimmen von Oberflächendaten und/oder Messdaten einer Oberfläche, insbesondere zur Qualitätskontrolle, eines zumindest teilweise transparenten Objekts, insbesondere eines Brillenglases, mit einer optisch wirksamen ersten Oberfläche und einer gegenüberliegenden optisch wirksamen zweiten Oberfläche, umfassend das Einstrahlen von polarisiertem Licht mit einer Einstrahlpolarisation wenigstens einer Beleuchtungseinrichtung auf einen zu untersuchenden Analysebereich des Objekts, wobei das Licht zur Einstellung der Einstrahlpolarisation durch einen der Beleuchtungseinrichtung zugeordneten oder in diese integrierten Polarisator geleitet wird, sowie das Empfangen von an der ersten und zweiten Oberfläche des Objekts reflektiertem Licht mit einer Analysepolarisation mittels wenigstens einer Aufnahmeeinrichtung.

Dabei wird das Licht durch einen der Aufnahmeeinrichtung zugeordneten oder in diese integrierten Analysator geleitet. Weiter umfasst das Verfahren das zumindest teilweise Unterdrücken einer von der ersten oder zweiten Oberfläche des Objekts reflektierten, von der Aufnahmeeinrichtung empfangenen unerwünschten Lichtintensität durch Einstellen der Einstrahlpolarisation des Polarisators und/oder der Analysepolarisation des Analysators, sowie das Messen einer Intensitätsverteilung oder einer Wellenfront des mit der Analysepolarisation empfangenen Lichts, um die Oberflächendaten und/oder Messdaten der Oberfläche im Analysebereich zu ermitteln. Alternativ oder zusätzlich zu der Intensitätsverteilung kann auch eine Form einer Wellenfront gemessen werden, die beispielsweise von einer punktförmigen Quelle ausgeht oder aus parallelem Licht besteht und die als Teil eines Musters oder statt eines Musters auf das Objekt eingestrahlt wird.

Die Oberflächendaten und/oder Messdaten handelt es sich, je nach Anwendung, um Höhendaten und/oder Neigungsdaten und/oder Krümmungsdaten der Oberfläche. Ein vorgegebener oder ein maximal zu erzielender Kontrast zwischen dem an der ersten Oberfläche reflektierten Licht und dem an der zweiten Oberfläche reflektierten Licht wird erreicht oder ein Grenzwert für die Intensität des unerwünschten Lichts wird erreicht oder unterschritten, indem eine rechnerische Festlegung der Polarisatorstellung und Analysatorstellung erfolgt oder die Stellungen von Polarisator und/oder Analysator iterativ verstellt werden.

Gemäß einer vorteilhaften Ausgestaltung des erfindungsgemäßen Verfahrens kann gegebenenfalls im Analysebereich eine Abweichung der ermittelten Oberflächendaten von Solldaten zu Oberflächendaten und/oder eine Abweichung der Messdaten von Solldaten zu Messdaten der Oberfläche bestimmt werden.

Ein Analysator stellt dabei einen Polarisator dar, der zur Analyse des reflektierten Lichts verwendet wird. Die Einfallsebene des Lichts stellt die Ebene dar, die von der Ausbreitungsrichtung des einfallenden Lichts sowie dem Lot auf die reflektierende Oberfläche aufgespannt wird. Damit enthält sie auch die Ausbreitungsrichtung des reflektierten Lichts.

Das hier beschriebene Verfahren unterdrückt zumindest teilweise unerwünschte Reflexionen bei der Messung von Oberflächendaten und/oder Messdaten einer Oberfläche zumindest teilweise transparenter Objekte und liefert dadurch zuverlässige Messergebnisse der Oberfläche. Dabei können auch Informationen über die erste und zweite Oberfläche, typischerweise Vorderfläche und Rückfläche des Objekts, mit einer Messung gewonnen werden. Eine besondere Anwendung des erfindungsgemäßen Verfahrens besteht in der Qualitätskontrolle von Brillengläsern. Dazu wird bei dem Verfahren polarisiertes Licht eingesetzt und ausgenutzt, dass Reflexions- und Transmissionskoeffizienten für senkrecht und parallel polarisiertes Licht vom jeweiligen Einfallswinkel abhängen und sich im Allgemeinen unterscheiden. Bei Reflexion und Brechung kann linear polarisiertes Licht seine Polarisation ändern. Dies liegt daran, dass üblicherweise für die Komponente, die parallel zur Einfallsebene liegt (p-polarisiert), andere Reflexions- bzw. Transmissionskoeffizienten gelten als für die Komponente, die senkrecht zur Einfallsebenen steht (s-polarisiert). Werden beide Komponenten in ihrer Intensität unterschiedlich beeinflusst, ändert sich die Richtung der Polarisation der resultierenden reflektierten bzw. gebrochenen Strahlung. Grundsätzlich gelten Reflexions- und Transmissionskoeffizienten nur für konkrete Einfallswinkel. Für die Messung ist der Einfallswinkel durch die Anordnung von Objekt und Beleuchtungseinrichtung gegeben.

Zwar hängt der konkrete Winkel von der jeweiligen Position des Objekts und der Neigung der Oberfläche in dem entsprechenden Punkt ab, diese Abweichungen können jedoch in einigen Konfigurationen im Vergleich zu dem durch den Aufbau vorgegebenen Winkel als klein angesehen werden.

Unabhängig davon gilt aber, dass in vielen Fällen eine vollständige Unterdrückung eines unerwünschten Reflexes gar nicht erforderlich ist, sondern eine Schwächung bereits ausreicht. Damit sind selbst größere Abweichungen in Ein- und Ausfallswinkel unkritisch. Der Betrachtung kann dann ein extremer oder mittlerer Winkel (z.B. ein ebenes Objekt) zugrunde gelegt werden.

Das erfindungsgemäße Verfahren umfasst das Bereitstellen eines zumindest teilweise transparenten Objekts (z.B. Linsen oder Brillengläser), das Durchführen der Aufnahmen durch Einstrahlen von Licht auf das Objekt und Empfangen von an dem Objekt reflektiertem Licht sowie die Zuordnung der eingestrahlten Musterelemente/Intensitäten von an der Vorder- bzw. Rückfläche des Objekts reflektiertem Licht. Weiter umfasst das Verfahren die Ermittlung von Oberflächendaten und/oder Messdaten zumindest einer der Oberflächen des Objekts und gegebenenfalls ein Vergleichsschritt. Letzterer kann ein Vergleichen von Oberflächendaten mit Solldaten zu Oberflächendaten, ein Vergleichen von Messdaten (z.B. Position auf der Beleuchtungseinrichtung) mit Solldaten zu Messdaten, oder die Berechnung der Abweichung von Oberflächendaten von Solldaten zu Oberflächendaten auf Basis der Abweichung der Messdaten von Solldaten zu Messdaten umfassen. Die Solldaten zu Messdaten können beispielsweise als Ergebnisse von Ray-Tracing-Rechnungen aus den Solldaten zu Oberflächendaten gewonnen werden. Zusätzlich kann das Verfahren gegebenenfalls eine Bewertung der Abweichung umfassen. Weiter kann das Verfahren das Durchführen einer globalen Qualitätsbewertung aus den festgestellten lokalen Abweichungen umfassen. Generell ist es ausreichend für das erfindungsgemäße Verfahren, einen Teil der Reflexe bzw. der Intensität eines Teiles der Pixel zuzuordnen und Daten zu einen Teil der Oberfläche zu bestimmen.

Dabei können die an einer Vorderfläche reflektierten Lichtintensitäten direkt, wie im Stand der Technik bekannt und beispielsweise in den einleitend genannten Schriften von Malacara, Dörband, und den einleitend genannten Schriften zu Stereodeflektometrie, Richtungskodierter Deflektometrie, Brillenglasqualitätskontrolle beschrieben, in geeigneter Weise ausgewertet werden, während bei der Auswertung der an einer Rückfläche reflektierten Lichtintensitäten Brechung an der Vorderfläche, Transmission durch das Objekt, Reflexion an der Rückfläche, Transmission durch das Objekt sowie Brechung an der Vorderfläche zu berücksichtigen sind.

Prinzipiell ist denkbar, das Verfahren auch auf Grenzflächen in optischen Elementen auszudehnen, die aus Teilelementen mit unterschiedlichen Brechungsindizes bestehen, wie beispielsweise achromatische Linsen wie Hall- und Dollondachromaten sowie Hastingtripletts. Der Begriff Oberfläche umfasst in diesem Fall nicht nur die Vorder- und Rückfläche, sondern auch die Grenzflächen innerhalb des optischen Elementes beispielsweise zwischen verschiedenen Materialien.

Eine Einstellung der Polarisation des eingestrahlten Lichts durch die gewählte Stellung des Polarisators der Beleuchtungseinrichtung, die mögliche Änderung der Polarisation bei der Reflexion an einer Oberfläche und die Auswahl einer bestimmten Polarisation des empfangenen Lichts durch die Stellung des Analysators der Aufnahmeeinrichtung ermöglichen ein gezieltes zumindest teilweises Unterdrücken oder ein gezieltes Hervorheben einzelner Reflexe. Dadurch können beispielsweise Reflexe der vorderen Oberfläche oder der rückwärtigen Oberfläche gezielt herausgefiltert werden.

Gemäß einer vorteilhaften Ausgestaltung können die Einstrahlpolarisation und/oder die Analysepolarisation derart gewählt werden, dass in der gemessenen Intensitätsverteilung die unerwünschte Lichtintensität dem von der Aufnahmeeinrichtung empfangenen Licht entspricht, das zu der Analysepolarisation verschieden polarisiert ist, und/oder eine erwünschte Lichtintensität dem von der Aufnahmeeinrichtung empfangenen Licht entspricht, das gleich der Analysepolarisation polarisiert ist.

Dabei können die Einstrahlpolarisation und/oder die Analysepolarisation derart gewählt werden, dass der detektierte Anteil der erwünschten Lichtintensität, d.h. die Lichtintensität, die auf die Reflexion an einer Oberfläche zurückgeht, größer ist als der detektierte Anteil der unerwünschten Lichtintensität, d.h. die Lichtintensität, die auf die Reflexion an der anderen Oberfläche zurückgeht und in speziellen Fällen sogar so, dass der detektierte Anteil der unerwünschten Lichtintensität vollständig unterdrückt wird. Die Verwendung unterschiedlich ausgerichteter Polarisationen von Polarisator und Analysator sowie das schrittweise Verstellen der Polarisationen von Polarisator und Analysator gegeneinander erlauben es, gezielt Reflexe der Vorderfläche und/oder der Rückfläche des Objekts zu schwächen und so den Schwerpunkt bei der Auswertung der Reflexe auf die Vorderfläche oder die Rückfläche zu legen und daraus Daten zu den Oberflächen zu bestimmen.

Weiterhin können die Einstrahlpolarisation und die Analysepolarisation derart gewählt werden, dass in der gemessenen Intensitätsverteilung die unerwünschte Lichtintensität dem von der Aufnahmeeinrichtung empfangenen Licht entspricht, das zu der Analysepolarisation senkrecht polarisiert ist, und die erwünschte Lichtintensität dem von der Aufnahmeeinrichtung empfangenen Licht entspricht, das nicht senkrecht der Analysepolarisation polarisiert ist.

Auch hier können die Einstrahlpolarisation und die Analysepolarisation insbesondere derart gewählt werden, dass der detektierte Anteil der erwünschten Lichtintensität, d.h. der Lichtintensität, die auf die Reflexion an einer Oberfläche zurückgeht, größer ist als der detektierte Anteil der unerwünschten Lichtintensität, d.h. der Lichtintensität, die auf die Reflexion an der anderen Oberfläche zurückgeht und sogar so, dass der detektierte Anteil der unerwünschten Lichtintensität vollständig unterdrückt wird.

Die Verwendung unterschiedlich ausgerichteter Polarisationen von Polarisator und Analysator sowie das schrittweise Verstellen der Polarisationen von Polarisator und Analysator gegeneinander erlauben es, gezielt Reflexe der Vorderfläche und/oder der Rückfläche des Objekts zu schwächen und so den Schwerpunkt bei der Auswertung der Reflexe auf die Vorderfläche oder die Rückfläche zu legen und daraus Daten zu den Oberflächen zu bestimmen.

Die Winkelstellung zur Unterdrückung der Reflexe an der Vorder- bzw. Rückfläche unterscheiden sich dabei nicht notwendigerweise um 90°. In diesen Fällen wird auch der Reflex der anderen Oberfläche geschwächt, was aber unkritisch für die Auswertung der Lichtintensitäten ist. Ferner können für mehrere Polarisatorstellungen die jeweiligen zur zumindest teilweisen Unterdrückung der Reflexe der einen Oberfläche notwendigen Stellung des Analysators und die dazugehörige Intensität der nicht zu unterdrückenden Reflexe ermittelt werden. Bevorzugt werden dann die Stellungen, bei denen die verbleibende Intensität der nicht zu unterdrückenden Reflexe oder der Kontrast zwischen beiden Reflexen maximal wird.

Gemäß einer vorteilhaften Ausgestaltung kann die Einstrahlpolarisation senkrecht oder parallel polarisiert in Bezug auf eine Einfallsebene sein, die durch das auf das Objekt auftreffende Licht und das von der Aufnahmeeinrichtung empfangene Licht aufgespannt wird. Senkrechte und/oder parallele Polarisationen können bevorzugt eingesetzt werden, da hier jeweils nur eine Komponente als Reflex auftritt und damit keine Drehung, sondern eine Unterdrückung der Reflexe stattfindet.

Gemäß einer vorteilhaften Ausgestaltung können die Einstrahlpolarisation und die Analysepolarisation zueinander verschieden ausgerichtet werden.

Insbesondere bei Verwendung einer Einstrahlpolarisation, die senkrecht oder parallel in Bezug auf eine Einfallsebene polarisiert ist, ist eine zueinander orthogonale Ausrichtung von Einstrahlpolarisation und Analysepolarisation besonders günstig.

Gemäß einer vorteilhaften Ausgestaltung können mehrere Beleuchtungseinrichtungen parallel eingesetzt werden, deren Einstrahlpolarisationen auch zueinander verschieden ausgerichtet sein können, und/oder mehrere Aufnahmeeinrichtungen parallel eingesetzt werden, deren Analysepolarisationen auch zueinander verschieden ausgerichtet sein können.

Da die Reflexions- und Transmissionskoeffizienten des Objekts von der lokalen Neigung der zu prüfenden Oberfläche abhängen, kann der Messbereich, d.h. Größe und lokale Neigung der Oberfläche erweitert werden, indem entweder mehrere Aufnahmeeinrichtungen, und/oder mehrere Beleuchtungseinrichtungen eingesetzt werden. Dadurch lässt sich eine größere Oberfläche des Objekts abdecken.

Auch lassen sich so innerhalb eines gegeben Messvolumens Objekte mit stärker unterschiedlichen Oberflächenneigungen vermessen. Dies liegt daran, dass die jeweiligen Reflexions- und Transmissionskoeffizienten vom Einfallswinkel abhängen und sich durch mehrere Aufnahmeeinrichtungen, und/oder mehrere Beleuchtungseinrichtungen ein größerer Bereich von Neigungen mit ähnlichem Ein- bzw. Ausfallswinkel abdecken lässt.

Gemäß einer vorteilhaften Ausgestaltung kann das eingestrahlte Licht diskrete Musterelemente auf die ersten und zweiten Oberflächen des Objekts einstrahlen. Dabei kann das Bestimmen von Oberflächendaten und/oder Messdaten im Analysebereich einer der beiden Oberflächen des Objekts aus der gemessenen Intensitätsverteilung das Detektieren der Position wenigstens eines reflektierten Musterelements in der von der Aufnahmeeinrichtung empfangenen Intensitätsverteilung, das Zuordnen des reflektierten Musterelements zu der Oberfläche, an der die Reflexion erfolgt ist, sowie das Verwenden der Position des Musterelements auf der Beleuchtungseinrichtung und der Position des reflektierten Musterelements in der gemessenen Intensitätsverteilung zur Bestimmung von Oberflächendaten und/oder Messdaten umfassen.

Dabei kann vorteilhaft mit Vorrichtungen, die einzelne Strahlen bzw. separierbare Muster generieren, im Folgenden auch Musterelemente genannt, gearbeitet werden. Je nach verwendetem Verfahren kann die erzeugte Strahlung dabei diffus (z.B. klassische deflektometrische Verfahren) oder gerichtet (z.B. richtungskodierte Deflektometrie, Verfahren mit definiert eingestrahlten Wellenfronten) sein. Eine diffuse Strahlung lässt sich beispielsweise mit einem Display, einem Projektionssystem (z.B. Display in Transmission, Mikrospiegel, Dias, Blenden-, oder (Mikro)Linsenanordnungen) in Kombination mit einer Streuplatte oder einzelnen zumindest teilweise diffusen Lichtquellen (z.B. LEDs) erzeugen.

Eine gerichtete Strahlung lässt sich beispielsweise durch ein solches Projektionssystem ohne Streuplatte oder durch ein Display bzw. ein Projektionssystem mit Streuplatte und anschließender Optik (z.B. f-Theta-Objektiv) erzeugen. Die Schritte zur Zuordnung der in Aufnahmen sichtbaren Reflexionen dieser Musterelemente an Vorder- bzw. Rückfläche können dabei entweder vor der Selektion der einzelnen Musterelemente auf Pixelebene durchgeführt werden oder bevorzugt nach der Selektion für jedes identifizierte Musterelement. Die Zuordnung auf Pixelebene kann zweckmäßigerweise analog durchgeführt werden.

Generell kann nach der Identifizierung der Musterelemente jedem Musterelement eine Position in den Aufnahmen über die Pixelkoordinaten der Aufnahmeeinrichtung, sowie eine Position in der Beleuchtungseinrichtung über die Pixelkoordinaten in der Beleuchtungseinrichtung zugeordnet werden. Daraus können auf Basis der bekannten Geometrie des Messaufbaus Oberflächendaten und/oder Messdaten der zu vermessenden Oberfläche in bekannter Weise bestimmt werden.

Grundsätzlich kann bei diesem Verfahren mit einer Polarisatorstellung gearbeitet werden. Dabei können mit einer Analysatorstellung Reflexe an der Vorderfläche sowie an der Rückfläche oder auch an beiden Oberflächen zur Zuordnung der Musterelemente verwendet werden.

Vorteilhaft kann auch mit zwei Analysatorstellungen gearbeitet werden, indem der oder die vorderflächigen Reflexe, die von einzelnen Musterelementen stammen, durch Ausschluss des oder der rückflächigen Reflexe aus einer Menge bzw. Aufnahme, die Reflexe beider Flächen enthalten kann, bestimmt werden. Ebenso ist auch eine Bestimmung des rückflächigen Reflexes durch Ausschluss des oder der vorderflächigen Reflexe denkbar.

Weiterhin ist denkbar, mit mehr als zwei Analysatorstellungen zu arbeiten, um so eine Bestimmung der erwünschten Reflexe bei gleichzeitiger Schwächung der unerwünschten Reflexe zu ermöglichen sowie daraus eine Zuordnung der erwünschten Reflexe zu Musterelementen und daraus eine Bestimmung der Oberflächendaten und/oder Messdaten einer Oberfläche zu ermöglichen. Weiterhin ist es denkbar, mit mehreren Polarisatorstellungen in ähnlicher Weise zu verfahren, um so eine noch bessere Abgrenzung zwischen erwünschten und unerwünschten Reflexe zu erreichen.

Gemäß einer vorteilhaften Ausgestaltung kann bei der Zuordnung des zumindest einen Musterelements zu der Oberfläche, an der die Reflexion erfolgt ist, die Lichtintensität des jeweiligen reflektierten Musterelements mit einem vorgegebenen oder aus der gemessenen Intensitätsverteilung ermittelten Schwellwert verglichen werden. Auf diese Weise lassen sich günstigerweise nur Reflexe von Musterelementen selektieren, deren Intensität den Schwellwert überschreitet, um so eine sichere Zuordnung der Musterelemente zu ermöglichen.

Gemäß einer vorteilhaften Ausgestaltung kann bei der Zuordnung des zumindest einen Musterelements zu der Oberfläche, an der die Reflexion erfolgt ist, auf Basis der gemessenen Intensitätsverteilung die Polarisation des jeweiligen reflektierten Musterelements zumindest näherungsweise ermittelt werden. Eine solche Vorgehensweise ist zweckmäßig, da dadurch die Zuordnung der Reflexe zu dem Musterelement zuverlässiger bestimmt werden kann. Die Polarisation eines Reflexes kann dabei vorteilhaft durch zwei Messungen mit zueinander orthogonalen Stellungen des Analysators bestimmt werden.

Gemäß einer vorteilhaften Ausgestaltung kann das eingestrahlte Licht flächige oder linienförmige Muster, insbesondere Linien, Balken, beispielsweise mit konstantem oder sinusförmigem Intensitätsverlauf, oder eine kontinuierliche Intensitätsverteilung auf die erste und zweite Oberfläche des Objekts einstrahlen. Wie im Fall der diskreten Musterelemente beschrieben, kann dazu diffuse oder gerichtete Strahlung verwendet werden. Dabei kann das Bestimmen der Oberflächendaten und/oder Messdaten im Analysebereich einer der beiden Oberflächen des Objekts aus der gemessenen Intensitätsverteilung das Bestimmen der Lichtintensität, die durch Reflexion an der zumindest einen Oberfläche erzeugt und von der Aufnahmeeinrichtung empfangen wird, für zumindest einen Punkt in der gemessenen Intensitätsverteilung, das Zuordnen des Punktes zu der Position auf der Beleuchtungseinrichtung, von der das Licht stammt, das durch Reflexion an der Oberfläche in den Punkt der gemessenen Intensitätsverteilung abgebildet wird, sowie das Verwenden der Position des Punktes in der gemessenen Intensitätsverteilung und der zugeordneten Position auf der Beleuchtungseinrichtung zur Bestimmung der Oberflächendaten und/oder Messdaten einer Oberfläche umfassen.

Bei diesem Verfahren werden nicht einzelne, separierbare Musterelemente abgebildet, sondern ganzflächige Muster. In jedem Pixel einer Aufnahmeeinrichtung überlagern sich daher die Helligkeiten der punktförmigen Reflexe des entsprechenden Oberflächenelements der Vorderfläche und des entsprechenden Oberflächenelements der Rückfläche. Da sich, bei der meist vorliegenden inkohärenten Überlagerung, die Intensitäten summieren, werden die Beiträge von Vorder- und Rückfläche für die Auswertung in jedem Pixel wieder getrennt.

Da es bei der Auswertung auf die Intensität der einzelnen Pixel ankommt, wird in jedem Pixel der Aufnahmeeinrichtung der Anteil des vorderflächigen Reflexes bzw. der Anteil der rückflächigen Reflexion bestimmt. Das Verfahren bezieht sich darauf, "Aufnahmen" zu ermitteln, die die Intensität der vorder- oder rückflächigen Reflexe wiedergeben. Daraus kann dann bei jedem einzelnen Pixel der Aufnahmeeinrichtung die über das Objekt abgebildete Position der Beleuchtungseinrichtung in bekannter Weise rekonstruiert werden. Daraus können dann in ebenfalls bekannter Weise an Hand der vorgegebenen Geometrie der Messvorrichtung Oberflächendaten und/oder Messdaten der zu vermessenden Oberfläche bestimmt werden.

Zur Steigerung der Genauigkeit bzw. Sicherheit der Messung oder falls eine Trennung der Intensitäten der vorder- und rückseitigen Reflexionen mit den oben beschriebenen Verfahren auf Grund ungünstiger Geometrien des Objekts nicht möglich sein sollte (z.B. Objektgeometrie mit stark unterschiedlicher Ausrichtung der Objektoberfläche zur Beleuchtungsrichtung), kann folgendes Verfahren durchgeführt werden:

- Erste Aufnahme mit einer ersten Polarisatorstellung (Index A in der folgenden Bezeichnung von Messgrößen) und einer ersten Analysatorstellung (Index 1),
- Zweite Aufnahme mit der ersten Polarisatorstellung (Index A) und einer zweiten Analysatorstellung (Index 2),
- Erste Aufnahme mit einer zweiten Polarisatorstellung (Index B) und einer dritten Analysatorstellung (Index 3),
- Zweite Aufnahme mit der zweiten Polarisatorstellung (Index B) und einer vierten Analysatorstellung (Index 4),
- Pixelweise Berechnung des Anteils der von der vorder- und rückseitigen Reflexion herrührenden Lichtintensität durch Lösung eines Gleichungssystems, wie nachfolgend beschrieben.

Der Vorder- (Index V) und der Rückseitenreflex (Index R) bilden Licht unterschiedlicher Quellen (z.B. unterschiedliche Pixel einer Mattscheibe) und damit unterschiedlicher Ursprungsintensitäten E auf denselben Pixel der Aufnahmeeinrichtung ab, die dort die Intensität D detektiert. Während der Vorderseitenreflex lediglich an der Vorderseite reflektiert (Reflexions-koeffizient $R^V$) wird, tritt bei dem Rückseitenreflex (effektiver Reflexionskoeffizient $R^R$) eine erste Brechung (Transmissionskoeffizient der Brechung $B^{R1}$) an der Vorderseite, eine erste Transmission (Transmissionskoeffizient $T^{R1}$) durch das Objekt, die Reflexion an der Rückseite des Objekts (Reflexionskoeffizient $R^1$), eine zweite Transmission durch das Objekt zurück (Transmissionskoeffizient $T^{R2}$) und schließlich eine zweite Brechung beim Austritt aus dem Objekt (Transmissionskoeffizient $B^{R2}$) auf.

Dabei gilt, dass die mit *A, B, 1* und *2* bezeichneten Polarisationsrichtungen nicht notwendigerweise s- bzw. p- polarisiert sind. Entsprechend hängen die Reflexionskoeffizienten in bekannter Weise von den Komponenten in der jeweiligen Polarisation ab.

Für die vier Messungen ergibt sich damit folgendes Gleichungssystem

$$D_A^1 = R_{A1}^V \times E_A^V + R_{A1}^R \times E_A^R$$

$$D_A^2 = R_{A2}^V \times E_A^V + R_{A2}^R \times E_A^R$$

$$D_B^3 = R_{B3}^V \times E_S^V + R_{B3}^R \times E_B^R$$

$$D_B^4 = R_{B4}^V \times E_S^V + R_{B4}^R \times E_B^R$$

Zur Bestimmung der Intensitäten des vorder- bzw. des rückseitigen Reflexes wird dieses System nach den Unbekannten $E_A^V$, $E_A^R$, $E_B^V$ und $E_B^R$, aufgelöst.

Sind die Koeffizienten R des Gleichungssystems aus Kenntnissen der Geometrie der Messanordnung bekannt, können die Unbekannten $E_A^V$, $E_A^R$, $E_B^V$ und $E_B^R$ direkt berechnet werden.

Bevorzugt können dazu an der Beleuchtungseinrichtung für die Polarisationsrichtungen A und B die gleichen Intensitäten gewählt werden, oder Intensitäten, die sich nur durch bekannte Faktoren I unterschieden (

$$E^R = \frac{E_A^R}{I_A^R} = \frac{E_B^R}{I_B^R} \quad \text{und} \quad E^V = \frac{E_A^V}{I_A^V} = \frac{E_B^V}{I_B^V}$$

), wodurch sich die Anzahl der Unbekannten halbiert und auf $E^R$ und $E^V$ reduziert.

Die gewonnenen Freiheitsgrade können zur Ermittlung unbekannter Koeffizienten oder unbekannter Parameter, von denen die Koeffizienten in a-priori bekannter Weise abhängen, genutzt werden.

Wählt man die Analysatorpolarisationen so, dass die Reflexe der Vorderfläche verschwinden (z.B. Wahl der s- und p-Polarisation für die Einstrahlpolarisationen *A* bzw. *B* sowie die Analysepolarisationen 2,4 bzw. 1,3), so verschwinden die Komponenten $R_{A1}^V$ und $R_{B4}^V$ ), wodurch sich das Gleichungssystem ebenfalls vereinfacht.

Wendet man beide obigen Vereinfachungen an, erhält man

$$D_S^1 = R_{S1}^R \times E^R$$

$$D_S^2 = R_{S2}^V \times E^R + R_{S2}^R \times E^R$$

$$D_P^3 = R_{P3}^V \times E^V + R_{P3}^R \times E^R$$

$$D_P^4 = R_{P2}^R \times E^R$$

Gemäß einer vorteilhaften Ausgestaltung kann bei der Zuordnung der Position des zumindest einen Punktes auf der Beleuchtungseinrichtung auf Basis der gemessenen Intensitätsverteilung die Polarisation des jeweiligen reflektierten Punktes zumindest näherungsweise ermittelt werden. Eine solche Vorgehensweise ist zweckmäßig, da dadurch die Zuordnung des Reflexes zu dem Musterelement zuverlässiger bestimmt werden kann.

Gemäß einer vorteilhaften Ausgestaltung kann für ein zumindest teilweises Unterdrücken oder Hervorheben von an der ersten Oberfläche reflektiertem Licht die Analysepolarisation rechnerisch bestimmt werden. Dabei umfasst das Verfahren das Zerlegen des eingestrahlten polarisierten Lichts in senkrecht und parallel polarisierte Komponenten in einer Einfallsebene. Anschließend wird die Lichtintensität beider Komponenten mit jeweils einem aus einem Einfallswinkel und einem Brechungsindex eines Materials des Objekts resultierenden Reflexionskoeffizienten multipliziert und die so erhaltenen Komponenten des reflektierten Lichts zusammengesetzt. Danach wird die Polarisationsrichtung des reflektierten Lichts bestimmt, sowie die Analysepolarisation des Analysators zumindest näherungsweise senkrecht oder zumindest näherungsweise parallel zur Polarisationsrichtung des reflektierten Lichts eingestellt. Die zumindest teilweise Unterdrückung des Reflexes der Vorderfläche dient erfindungsgemäß dazu, den rückseitigen Reflex deutlicher herauszustellen oder zu isolieren. Die Bestimmung der Ausrichtung der Polarisationsachse ist für den vorderflächigen Reflex konzeptionell einfacher als für den rückflächigen, da hier nur eine Reflexion betrachtet werden muss. Generell kann zum zumindest teilweisen Unterdrücken oder Hervorheben des Reflexes der Vorderfläche mit jeder Stellung des Polarisators gearbeitet werden. Die Stellung des Analysators ist entsprechend anzupassen.

Gemäß einer vorteilhaften Ausgestaltung kann für ein zumindest teilweises Unterdrücken oder Hervorheben von an der zweiten Oberfläche reflektiertem Licht die Analysepolarisation rechnerisch bestimmt werden. Dabei umfasst das Verfahren das Zerlegen des eingestrahlten polarisierten Lichts in senkrecht und parallel polarisierte Komponenten in einer ersten Einfallsebene des Lichts, die der Einfallsebene der Brechung an der ersten Oberfläche entspricht, sowie das anschließende Multiplizieren der Lichtintensität beider Komponenten mit jeweils einem aus einem ersten Einfallswinkel und dem Brechungsindex des Materials des Objekts resultierenden Transmissionskoeffizienten.

Weiter umfasst das Verfahren das Umrechnen dieser Komponenten in senkrecht und parallel polarisierte Komponenten in einer zweiten Einfallsebene, die der Einfallsebene der Reflexion an der zweiten Oberfläche entspricht, sowie das anschließende Multiplizieren der Lichtintensität beider Komponenten mit jeweils einem Reflexionskoeffizienten, der aus einem sich aus der Brechung an der ersten Oberfläche sowie der Reflektion an der zweiten Oberfläche ergebenden zweiten Einfallswinkel und dem Brechungsindex des Materials des Objekts und/oder einer Halterung resultiert.

Anschließend werden diese Komponenten in senkrecht und parallel polarisierte Komponenten in einer dritten Einfallsebene, die einer Einfallsebene der zweiten Brechung an der erste Oberfläche entspricht, umgerechnet und die Lichtintensität beider Komponenten mit jeweils einem zweiten Transmissionskoeffizienten, der aus einem sich aus der Reflexion an der zweiten Oberfläche sowie der ersten Oberfläche ergebenden dritten Einfallswinkel und dem Brechungsindex des Materials des Objekts resultiert, multipliziert.

Die so erhaltenen Komponenten des transmittierten Lichts werden zusammengesetzt und die Polarisationsrichtung des durch die erste Oberfläche zum zweiten Mal gebrochenen Lichts bestimmt, sowie die Analysepolarisation des Analysators zumindest näherungsweise senkrecht oder zumindest näherungsweise parallel zur Polarisationsrichtung des zum zweiten Mal durch die erste Oberfläche gebrochenen Lichts eingestellt.

Die zumindest teilweise Unterdrückung des Reflexes der Rückfläche dient erfindungsgemäß dazu, den vorderseitigen Reflex deutlicher herauszustellen oder zu isolieren. Die Bestimmung der Drehung der Polarisationsachse ist für den rückflächigen Reflex konzeptionell aufwändiger als für den vorderflächigen, da hier zwei Brechungen, zwei Transmissionen und eine Reflexion betrachtet werden. Generell kann auch hier zur zumindest teilweisen Unterdrückung oder Hervorhebung des Reflexes der Rückfläche jeder Stellung des Polarisators gearbeitet werden. Die Stellung des Analysators ist entsprechend anzupassen.

Die in beiden vorstehenden Absätzen genannten Winkel und Einfallsebenen können, aber müssen nicht notwendigerweise den am Objekt tatsächlich auftretenden Winkeln bzw. Einfallsebenen entsprechen. Vielmehr ist es in vielen Fällen ausreichend, Winkel bzw. Einfallsebenen zu betrachten, die im Bereich (zum Beispiel in der Mitte oder an der Grenze) der für ein Objekt oder für eine Verteilung von Objekten zu erwartenden Winkeln liegen.

Gemäß einer vorteilhaften Ausgestaltung kann für ein zumindest teilweises Unterdrücken der Lichtintensität von an der ersten oder zweiten Oberfläche reflektiertem Licht die Stellung von Polarisator und/oder Analysator empirisch bestimmt werden. Dabei umfasst das Verfahren das Einstellen einer beliebigen Stellung des Polarisators und einer beliebigen Stellung des Analysators.

Anschließend werden Intensitätsverteilungen des an der ersten und an der zweiten Oberfläche reflektierten Lichts gemessen, sowie der Kontrast zwischen dem an der ersten Oberfläche reflektierten Licht und dem an der zweiten Oberfläche reflektierten Licht bewertet. Danach werden die Stellungen von Polarisator und/oder Analysator iterativ verstellt, bis ein vorgegebener oder ein maximal zu erzielender Kontrast zwischen dem an der ersten Oberfläche reflektierten Licht und dem an der zweiten Oberfläche reflektierten Licht erreicht ist oder ein Grenzwert für die Intensität des unerwünschten Lichts erreicht oder unterschritten wird. Neben der rechnerischen Festlegung der Polarisator- und Analysatorstellungen ist so auch ein empirisches Vorgehen zur Minimierung eines unerwünschten Reflexes möglich.

Die Erfindung betrifft nach einem weiteren Aspekt eine Vorrichtung gemäß Anspruch 13 zum Bestimmen von Oberflächendaten und/oder Messdaten einer Oberfläche eines zumindest teilweise transparenten Objekts, insbesondere eines Brillenglases, mit dem oben beschriebenen Verfahren, wobei es sich bei den Oberflächendaten und/oder Messdaten um Höhendaten und/oder Neigungsdaten und/oder Krümmungsdaten der Oberfläche handelt. Die Vorrichtung umfasst wenigstens eine Beleuchtungseinrichtung mit einem in einer optischen Achse nach oder als Teil der Beleuchtungseinrichtung angeordneten Polarisator mit einer Einstrahlpolarisation, wenigstens eine Aufnahmeeinrichtung mit einem in einer optischen Achse vor oder als Teil der Aufnahmeeinrichtung angeordneten Analysator mit einer Analysepolarisation, sowie eine Halterung für das Objekt. Diskrete Musterelemente und/oder flächige Muster sind dabei von der Beleuchtungseinrichtung durch den Polarisator auf das Objekt einstrahlbar und von der Aufnahmeeinrichtung durch den Analysator empfangbar.

Die Beleuchtungseinrichtung umfasst einen Mustererzeuger, der beispielsweise ein Display, ein Projektionssystem, einzelne Lichtquellen oder eine Kombination aus Projektionssystem mit Streuplatte umfassen kann. Je nach verwendetem Verfahren kann die erzeugte Strahlung dabei diffus (z.B. klassische deflektometrische Verfahren) oder gerichtet (z.B. richtungskodierte Deflektometrie, Verfahren mit definiert eingestrahlten Wellenfronten) sein.

Eine diffuse Strahlung lässt sich beispielsweise mit einem Display, einem Projektionssystem (z.B. Display in Transmission, Mikrospiegel, Dias, Blenden- oder (Mikro)Linsenanordnungen) in Kombination mit einer Streuplatte oder einzelnen zumindest teilweise diffusen Lichtquellen (z.B. LEDs) erzeugen. Eine gerichtete Strahlung lässt sich beispielsweise durch ein solches Projektionssystem ohne Streuplatte oder durch ein Display bzw. ein Projektionssystem mit Streuplatte und anschließender Optik (z.B. f-Theta-Objektiv) erzeugen.

Die Aufnahmeeinrichtung umfasst beispielsweise eine Kamera, die das von der Beleuchtungseinrichtung eingestrahlte und am Objekt gespiegelte Licht aufnimmt. Erfindungsgemäß wird sowohl zwischen Beleuchtungseinrichtung und Objekt als auch zwischen Objekt und Aufnahmeeinrichtung jeweils ein polarisierendes Element eingefügt, sofern nicht eines oder beide dieser polarisierenden Elemente bereits Teil der Beleuchtungs- bzw. Aufnahmeeinrichtung sind.

Eines oder beide dieser polarisierenden Elemente sind beispielsweise um die optische Achse drehbar gelagert, damit unterschiedliche Stellungen der Polarisationsebene eingestellt werden können.

Da die Reflexions- und Transmissionskoeffizienten des Objekts von der lokalen Neigung der zu prüfenden Oberfläche abhängen, kann der Messbereich, d.h. Größe und lokale Neigung der Oberfläche erweitert werden, indem entweder mehrere Aufnahmeeinrichtungen, und/oder mehrere Beleuchtungseinrichtungen eingesetzt werden. Dadurch lässt sich eine größere Oberfläche des Objekts abdecken.

Auch lassen sich so innerhalb eines gegeben Messvolumens Objekte mit stärker unterschiedlichen Oberflächenneigungen vermessen. Dies liegt daran, dass die jeweiligen Reflexions- und Transmissionskoeffizienten vom Einfallswinkel abhängen und sich durch mehrere Aufnahmeeinrichtungen, und/oder mehrere Beleuchtungseinrichtungen ein größerer Bereich von Neigungen mit ähnlichem Ein- bzw. Ausfallswinkel abdecken lässt.

Gemäß einer besonders vorteilhaften Ausgestaltung können diskrete Musterelemente und/oder flächige oder linienförmige Muster von der Beleuchtungseinrichtung durch den Polarisator auf das Objekt einstrahlbar sein und von der Aufnahmeeinrichtung durch den Analysator empfangbar sein.

Alternativ kann auch eine Wellenfront (beispielsweise von einer punktförmigen Quelle ausgehend oder aus parallelem Licht bestehend) auf das Objekt eingestrahlt werden, wobei der Wellenfront auch zusätzlich ein Muster aufgeprägt sein kann. Die Wellenfront wird am Objekt (Vorder- und Rückseite) reflektiert und kann danach analysiert werden. So kann gemäß einer vorteilhaften Ausgestaltung die Beleuchtungseinrichtung mit dem Polarisator Strahlung mit einer vorgegebenen Einstrahlpolarisation auf das Objekt einstrahlen und die Aufnahmeeinrichtung mit dem Analysator die Wellenfront einer durch den Analysator bestimmten Polarisationskomponente empfangen.

Dabei kann die eingestrahlte Strahlung eine vorgegebene, insbesondere ebene oder kugelförmige Wellenfront aufweisen und die Aufnahmeeinrichtung kann die Form der Wellenfront analysieren und dabei insbesondere nach dem Hartmann-Prinzip (Blendenplatte und Aufnahmeeinheit), Shack-Hartmann-Prinzip ((Mikro-)Linsenarray und Aufnahmeeinheit)), dem Moire-Prinzip oder interferometrisch arbeiten. Auch in diesem Fall lassen sich mit einem Polarisator vor dem Objekt und einem Analysator nach dem Objekt die Reflexe von Vorder- und Rückseite erfindungsgemäß trennen.

Gemäß einer vorteilhaften Ausgestaltung kann die Vorrichtung eine Datenverarbeitungseinrichtung zur Analyse der mit der Aufnahmeeinrichtung empfangenen reflektierten Lichtstrahlung umfassen. Die Datenverarbeitungseinrichtung steuert dabei eine Auswertung der mit der Aufnahmeeinrichtung aufgenommenen reflektierten Lichtstrahlung. Ferner kann diese oder eine weitere Datenverarbeitungseinrichtung mit der Beleuchtungseinrichtung verbunden sein und die Mustererzeugung der Beleuchtungseinrichtung steuern. Die Beleuchtung kann flexibel oder auch fix sein.

Die Erfindung betrifft nach einem weiteren Aspekt ein Computerprogrammprodukt gemäß Anspruch 17 zum Bestimmen von Oberflächendaten und/oder Messdaten einer Oberfläche eines zumindest teilweise transparenten Objekts, insbesondere eines Brillenglases. Das Computerprogrammprodukt umfasst dabei ein computerlesbares Speichermedium, welches einen Programmcode beinhaltet, der dazu ausgebildet ist, ein Verfahren wie oben beschrieben auszuführen, wenn der Programmcode auf einer Datenverarbeitungseinrichtung ausgeführt wird.

## Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

## Es zeigen beispielhaft:

Fig. 1 Reflexionskoeffizienten für die Reflexion an einer Vorderfläche eines Objekts bei senkrecht und parallel zur Einfallsebene polarisiertem Licht;

Fig. 2 Reflexionskoeffizienten für die Reflexion an einer Rückfläche des Objekts von Fig. 1 bei senkrecht und parallel zur Einfallsebene polarisiertem Licht;

Fig. 3 eine schematische Darstellung einer Vorrichtung zum Bestimmen von Oberflächendaten und/oder Messdaten einer Oberfläche eines Objekts gemäß Anspruch 13 mit einer Beleuchtungseinrichtung und einer Aufnahmeeinrichtung;

Fig. 4 eine Definition der Ein- und Ausfallswinkel von an der ersten und der zweiten Oberfläche des Objekts reflektierten Lichtstrahlen;

Fig. 5 eine schematische Darstellung einer Vorrichtung zum Bestimmen von Oberflächendaten und/oder Messdaten einer Oberfläche eines Objekts nach einem weiteren Ausführungsbeispiel der Erfindung mit mehreren Beleuchtungseinrichtungen und mehreren Aufnahmeeinrichtungen;

Fig. 6 eine schematische Darstellung einer Aufnahme der Reflexion von an der Vorder- und Rückfläche eines Brillenglases reflektierten diskreten Musterelementen mit einer Vorrichtung und einem Verfahren nach einem Ausführungsbeispiel der Erfindung;

Fig. 7 eine schematische Darstellung der Aufnahme der Reflexion der diskreten Musterelemente von Fig. 6, wobei durch eine zur Analysatorstellung in Figur 6 orthogonale Analysatorstellung der vorderflächige Reflex unterdrückt ist;

Fig. 8 eine schematische Darstellung der Aufnahme der Reflexion der diskreten Musterelemente von Fig. 6, wobei durch eine zu den Analysatorstellungen in den Figuren 6 und 7 verschiedenen Analysatorstellung der rückflächige Reflex unterdrückt ist;

Fig. 9 ein Flussdiagramm eines Verfahrens zum Bestimmen von Oberflächendaten und/oder Messdaten einer Oberfläche eines zumindest teilweise transparenten Objekts gemäß Anspruch 1;

Fig. 10 ein Flussdiagramm eines Verfahrens zum Bestimmen von Oberflächendaten und/oder Messdaten einer Oberfläche eines zumindest teilweise transparenten Objekts mit diskreten Musterelementen nach einem weiteren Ausführungsbeispiel der Erfindung;

Fig. 11 ein Flussdiagramm eines Verfahrens zum Bestimmen von Oberflächendaten und/oder Messdaten einer Oberfläche eines zumindest teilweise transparenten Objekts mit flächigen Mustern nach einem weiteren Ausführungsbeispiel der Erfindung; und

Fig. 12 ein Flussdiagramm für ein weiteres Ausführungsbeispiel des erfindungsgemäßen Verfahrens, bei dem Messungen mit zwei Analysatorstellungen durchgeführt werden.

## Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

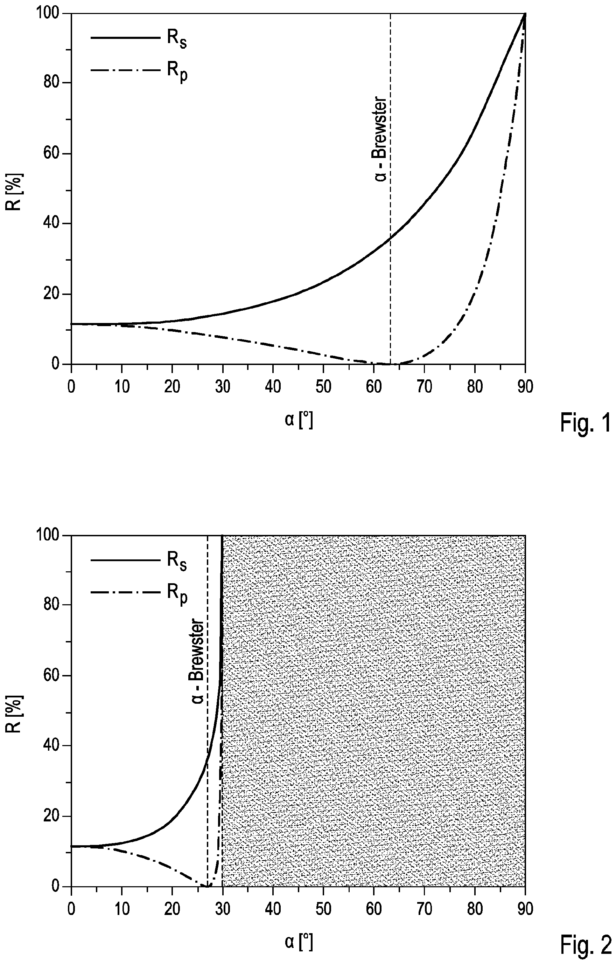

Figur 1 zeigt Reflexionskoeffizienten für die Reflexion an einer Vorderfläche eines transparenten Objekts bei senkrecht ($R_s$) und parallel ($R_p$) zur Einfallsebene polarisiertem Licht als Funktion des Einfallswinkels $\alpha$. Bei Reflektion und Brechung kann linear polarisiertes Licht seine Polarisation ändern. Dies liegt daran, dass üblicherweise für die Komponente, die parallel zur Einfallsebene liegt (p), andere Reflexions- bzw. Transmissionskoeffizienten gelten als für die Komponente, die senkrecht zur Einfallsebene steht (s). Werden beide Komponenten in ihrer Intensität unterschiedlich beeinflusst, ändert sich die Richtung der resultierenden reflektierten bzw. gebrochenen

Strahlung. Figur 1 zeigt die Reflexionskoeffizienten für die Reflexion an der Vorderfläche für ein Objekt aus einem Material mit dem Brechungsindex 2,0. Die Transmissionskoeffizienten ergänzen die entsprechenden Reflexionskoeffizienten zu jeweils 100%. Ebenfalls eingezeichnet ist der Brewster-Winkel, bei dem die Reflexion des parallel orientierten Lichts ausgelöscht ist.

In Figur 2 sind die entsprechenden Reflexionskoeffizienten für die Reflexion an einer Rückfläche des Objekts von Figur 1 bei senkrecht ($R_s$) und parallel ($R_p$) zur Einfallsebene polarisiertem Licht als Funktion des Einfallswinkels $\alpha$ dargestellt. Der Bereich der Totalreflexion an der Rückfläche des Objekts beginnt bereits bei einem Einfallswinkel von ca. 30°. Die Transmissionskoeffizienten ergänzen die entsprechenden Reflexionskoeffizienten zu jeweils 100%. Ebenfalls eingezeichnet ist der Brewster-Winkel, bei dem die Reflexion des parallel orientierten Lichts ausgelöscht ist.

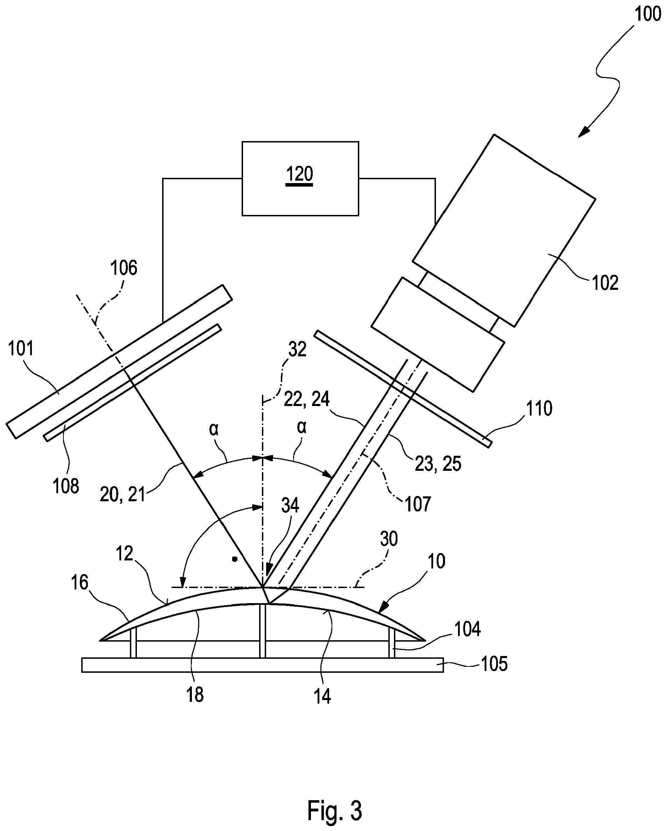

Figur 3 zeigt eine schematische Darstellung einer Vorrichtung 100 zum Bestimmen von Oberflächendaten 16, 18 und/oder Messdaten zumindest einer Oberfläche 12, 14 eines Objekts 10, insbesondere eines Brillenglases, gemäß Anspruch 13 mit einer Beleuchtungseinrichtung 101 und einer Aufnahmeeinrichtung 102. Die Vorrichtung 100 umfasst die Beleuchtungseinrichtung 101 mit einem in einer optischen Achse 106 nach der Beleuchtungseinrichtung 101 angeordneten Polarisator 108 mit einer Einstrahlpolarisation, die Aufnahmeeinrichtung 102 mit einem in einer optischen Achse 107 vor der Aufnahmeeinrichtung 102 angeordneten Analysator 110 mit einer Analysepolarisation, sowie eine Halterung 104 für das Objekt 10. Bei dem erfindungsgemäßen Verfahren werden Lichtstrahlen 20 mit diskreten Musterelementen oder flächigen Mustern und/oder Wellenfronten 21 von der Beleuchtungseinrichtung 101 durch den Polarisator 108 auf das Objekt 10 eingestrahlt und von der Aufnahmeeinrichtung 102 durch den Analysator 110 empfangen. Die Vorrichtung umfasst weiter eine Datenverarbeitungseinrichtung 120 zur Steuerung der Beleuchtungseinrichtung 101 und Analyse der mit der Aufnahmeeinrichtung 102 empfangenen reflektierten Lichtstrahlung. Die Datenverarbeitungseinrichtung 120 steuert dabei Mustererzeugung der Beleuchtungseinrichtung 101 und Auswertung der mit der Aufnahmeeinrichtung 102 aufgenommenen reflektierten Lichtstrahlung.

Das Objekt 10 in Form eines Brillenglases weist eine erste Oberfläche 12 (hier die Vorderfläche des Brillenglases) mit entsprechenden Oberflächendaten 16, wie Höhendaten, Neigungsdaten, Krümmungsdaten, sowie eine zweite Oberfläche 14 (hier die Rückfläche des Brillenglases) mit entsprechenden Oberflächendaten 18 auf. Das Objekt 10 liegt mit seiner zweiten Oberfläche 14 auf dem Halter 104, der vorteilhaft als Dreibein ausgeführt ist, um eine stabile und eindeutige Lagerung zu erfüllen. Der Halter 104 ist seinerseits auf einer Auflage 105 angeordnet. Das eingestrahlte Licht fällt mit einer vorgegebenen Intensitätsverteilung 20 oder Wellenfront 21 unter einem Winkel $\alpha$ gegen das auf einer Tangentialfläche 30 aufgestellte Lot 32 auf die Vorderfläche 12 des Objekts 10. Das Licht wird teilweise an der Vorderfläche 12 reflektiert. Die Intensitätsverteilung 22 oder Wellenfront 24 des an der Vorderfläche 12 reflektierten Lichts wird von der Aufnahmeeinrichtung 102 durch den Analysator 110 gemessen. Der Teil des einfallenden Lichts, der nicht direkt reflektiert wird, dringt als Transmission in das Objekt 10 ein. An der Rückfläche 14 wird ein Teil des transmittierten Lichts reflektiert, durchdringt wieder das Objekt 10, ein Teil dieses Lichts wird an der Vorderfläche 12 gebrochen und kann dann ebenfalls von der Aufnahmeeinrichtung 102 in der Intensitätsverteilung 23 oder Wellenfront 25 gemessen werden.

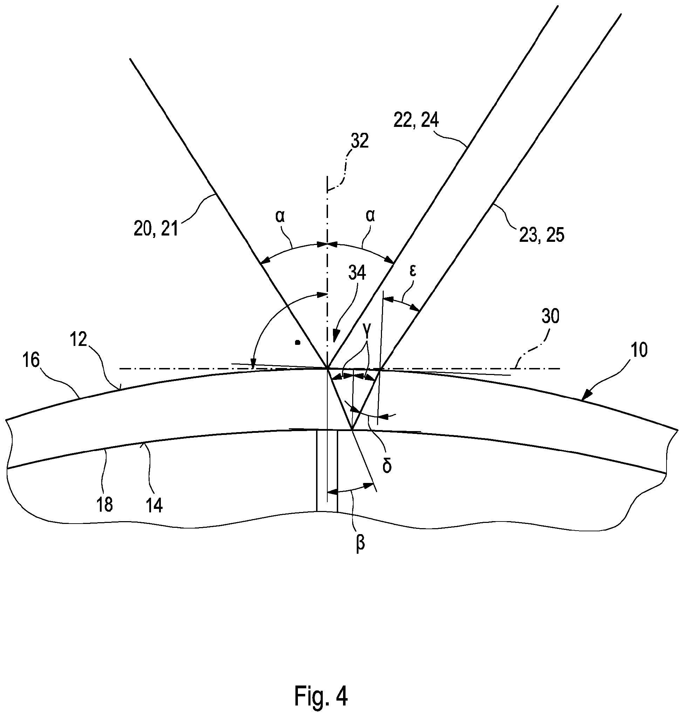

Figur 4 zeigt eine Definition der Ein- und Ausfallswinkel $\alpha$, $\beta$, $\gamma$, $\delta$, $\varepsilon$ von an der ersten Oberfläche 12 und der zweiten Oberfläche 14 des Objekts 10 reflektierten Lichtstrahlen. Der Winkel $\alpha$ definiert den Ein- und Ausfallswinkel von an der ersten Oberfläche 12 reflektierten Strahlen, die als Intensitätsverteilung 22 oder Wellenfront 24 gemessen werden. Der Winkel $\beta$ definiert den Ausfallswinkel, welcher der Brechung der einfallenden und in das Objekt eintretenden Strahlen an der ersten Oberfläche 12 entspricht. Der Winkel $\gamma$ definiert den Ein- und Ausfallswinkel, der sich durch Brechung an der ersten Oberfläche 12 und Reflektion an der zweiten Oberfläche 14 ergibt. Die Winkel $\delta$ und $\varepsilon$ definieren den Ein- bzw. Ausfallswinkel, die sich durch die Brechung der an der zweiten Oberfläche 14 reflektierten Strahlen an der ersten Oberfläche 12 ergeben, die nach dem Austritt als Intensitätsverteilung 23 oder Wellenfront 25 gemessen werden.

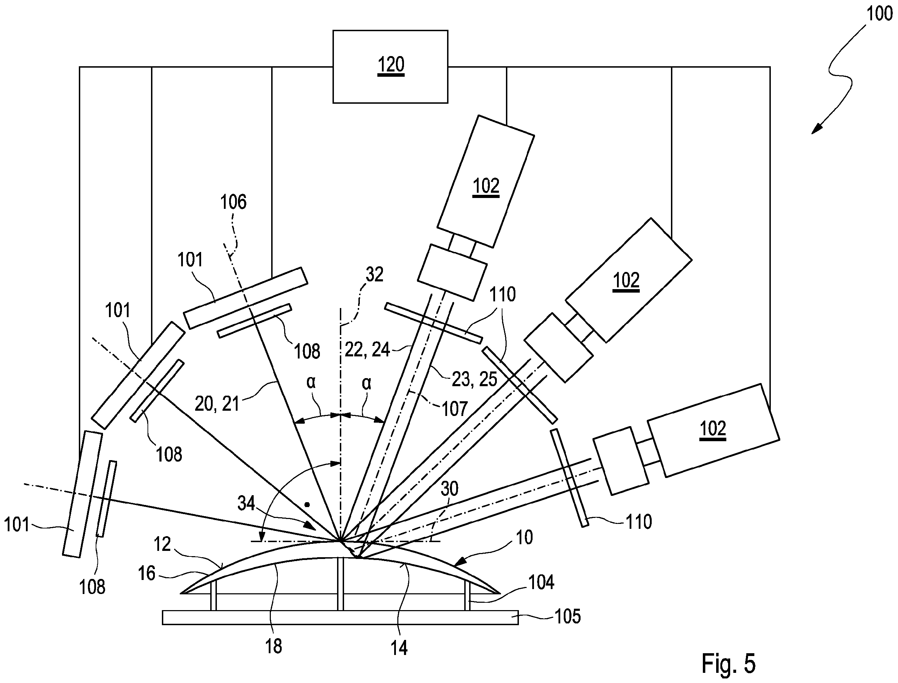

Figur 5 zeigt eine schematische Darstellung einer Vorrichtung 100 zum Bestimmen von Oberflächendaten 16, 18 und/oder Messdaten einer Oberfläche eines Objekts 10 nach einem weiteren Ausführungsbeispiel der Erfindung mit mehreren Beleuchtungseinrichtungen 101 und mehreren Aufnahmeeinrichtungen 102. Dadurch lässt sich eine größere Oberfläche des Objekts 10 abdecken. Auch lassen sich so innerhalb eines gegeben Messvolumens Objekte mit stärker unterschiedlichen Oberflächenneigungen vermessen. Dies liegt daran, dass die jeweiligen Reflexions- und Transmissionskoeffizienten vom Einfallswinkel abhängen und sich durch mehrere Aufnahmeeinrichtungen, und/oder mehrere Beleuchtungseinrichtungen ein größerer Bereich von Neigungen mit ähnlichem Ein- bzw. Ausfallswinkel abdecken lässt.

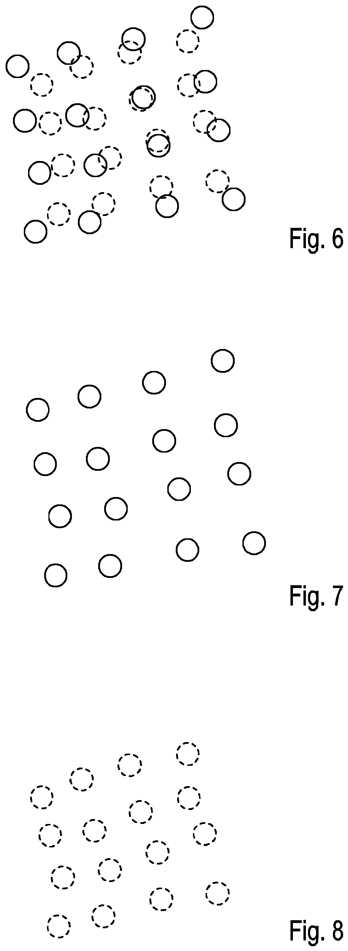

Figur 6 zeigt eine schematische Darstellung einer Aufnahme der Reflexion von an der Vorderfläche 12 und Rückfläche 14 eines Brillenglases reflektierten Musters aus 16 diskreten Musterelementen mit einer Vorrichtung 100, wie in Fig. 3 dargestellt, und einem Verfahren nach dem Ausführungsbeispiel der Erfindung. Das Messobjekt (Kunststoffgläser) wurde mit einer LED-Beleuchtung angestrahlt, welche die Beleuchtungseinrichtung 100 darstellt und ein Muster aus jeweils vier Musterelementen in vier Zeilen einstrahlt. Die Abbildung wurde mit einer Industriekamera aufgenommen. Das eingestrahlte Licht wurde mit einem Stück einer Folie aus langkettigen Polymeren polarisiert. Ein weiteres Stück dieser Folie wurde als Analysator vor der Aufnahmeeinrichtung eingesetzt. Die Polarisationsrichtung des Analysators steht dabei senkrecht zu der Polarisationsrichtung des Analysators, die zur Aufnahme der in Figur 7 gezeigten Abbildung verwendet wurde. Die Polarisationsrichtung des Polarisators entspricht dagegen der Polarisationsrichtung des Polarisators, die zur Aufnahme der in Figur 7 gezeigten Abbildung verwendet wurde.

Figur 7 zeigt im Vergleich dazu eine Aufnahme der Reflexion der diskreten Musterelemente von Figur 6, wobei die Stellung des Polarisators vorgegeben war und die Stellung des Analysators derart gewählt wurde, dass der vorderflächige Reflex unterdrückt ist. Es ist nur noch der Reflex von der Rückseite des Brillenglases sichtbar.

Figur 8 zeigt weiter eine schematische Darstellung der Aufnahme der Reflexion der diskreten Musterelemente von Fig. 6, wobei durch eine zu den Analysatorstellungen in den Figuren 6 und 7 verschiedenen Analysatorstellung der rückflächige Reflex unterdrückt ist.

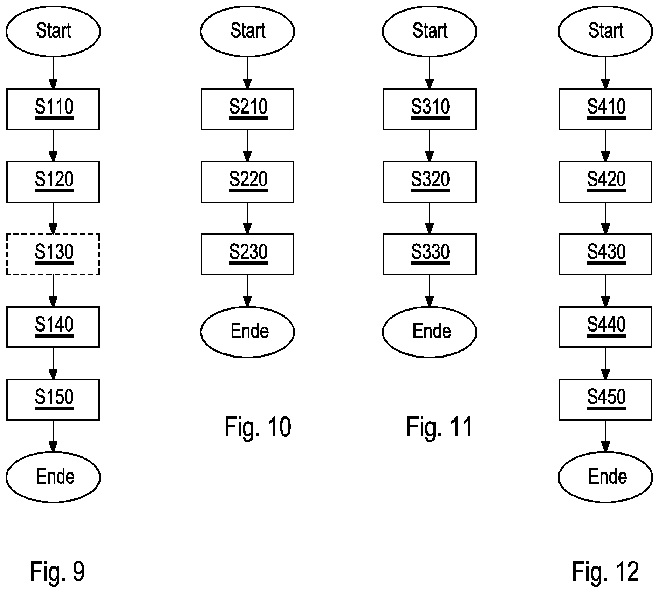

In Figur 9 ist ein Flussdiagramm des Verfahrens zum Bestimmen von Oberflächendaten 16, 18 und/oder Messdaten einer Oberfläche 12, 14 eines zumindest teilweise transparenten Objekts 10, mit einer optisch wirksamen ersten Oberfläche 12 und einer gegenüberliegenden optisch wirksamen zweiten Oberfläche 14, insbesondere eines Brillenglases, gemäß Anspruch 1 dargestellt. Die Bezugszeichen beziehen sich dabei auf die Darstellung in Fig. 3. In Schritt S110 wird polarisiertes Licht mit einer Einstrahlpolarisation wenigstens einer Beleuchtungseinrichtung 101 auf einen zu untersuchenden Analysebereich 34 des Objekts 10 eingestrahlt, wobei das Licht zur Einstellung der Einstrahlpolarisation durch der Beleuchtungseinrichtung 101 einen Polarisator 108 geleitet wird. In Schritt S120 wird an der ersten und/oder zweiten Oberfläche 12, 14 reflektiertes Licht mit einer Analysepolarisation mittels wenigstens einer Aufnahmeeinrichtung 102 empfangen, wobei das Licht durch einen der Aufnahmeeinrichtung 102 zugeordneten Analysator 110 geleitet wird. Schritt S130 beinhaltet das zumindest teilweise Unterdrücken einer von der ersten oder zweiten Oberfläche 12, 14 reflektierten, von der Aufnahmeeinrichtung 102 empfangenen unerwünschten Lichtintensität durch Einstellen der Einstrahlpolarisation des Polarisators 108 und/oder der Analysepolarisation des Analysators 110. Alternativ können Polarisator 108 und Analysator 110 bereits vor Beginn der Messung auf geeignete, bereits bekannte, Stellungen zum Unterdrücken der unerwünschten Lichtintensität eingestellt werden. In Schritt S140 wird gegebenenfalls nach erfolgreichem zumindest teilweisem Unterdrücken der unerwünschten Lichtintensität in Schritt S130 eine Intensitätsverteilung 22, 23 einer von der zweiten oder ersten Oberfläche 14, 12 reflektierten, von der Aufnahmeeinrichtung 102 empfangenen Lichtintensität über den Analysebereich 34 gemessen, um Oberflächendaten 16, 18 im Analysebereich 34 zu ermitteln, während in Schritt S150 daraus eine Abweichung der ermittelten Oberflächendaten 16, 18 im Analysebereich 34 von Solldaten im Analysebereich 34 bestimmt wird.

Die Einstrahlpolarisation und die Analysepolarisation werden derart gewählt, dass in der gemessenen Intensitätsverteilung 22, 23 die unerwünschte Lichtintensität dem von der Aufnahmeeinrichtung 102 empfangenen Licht entspricht, das zu der Analysepolarisation verschieden polarisiert ist. Weiter werden die Einstrahlpolarisation und die Analysepolarisation zweckmäßig derart gewählt, dass die erwünschte Lichtintensität dem von der Aufnahmeeinrichtung 102 empfangenen Licht entspricht, das gleich der Analysepolarisation polarisiert ist, wobei die erwünschte Lichtintensität größer ist als die unerwünschte Lichtintensität. Die Einstrahlpolarisation und die Analysepolarisation können vorteilhaft zueinander verschieden ausgerichtet werden, insbesondere zueinander orthogonal ausgerichtet. Vorteilhaft ist dabei die Einstrahlpolarisation senkrecht oder parallel polarisiert in Bezug auf die Einfallsebene, die durch das auf das Objekt 10 auftreffende Licht und das von der Aufnahmeeinrichtung 102 empfangene Licht aufgespannt wird. Insbesondere in diesem Fall werden die Einstrahl- und die Analysepolarisation vorteilhafterweise zueinander orthogonal ausgerichtet. Mehrere Beleuchtungseinrichtungen 101 und/oder mehrere Aufnahmeeinrichtungen 102 können parallel eingesetzt werden, um so beispielsweise größere Analysebereiche 34 des Objekts 10 abzudecken.

Für ein zumindest teilweises Unterdrücken von an der ersten Oberfläche 12, also der Vorderfläche des Objekts 10, reflektiertem Licht (siehe Figur 4) kann die Analysepolarisation rechnerisch bestimmt werden. Dazu wird das eingestrahlte polarisierte Licht in senkrecht und parallel polarisierte Komponenten in der Einfallsebene zerlegt. Dann wird die Lichtintensität beider Komponenten mit jeweils einem aus einem Einfallswinkel $\alpha$ und einem Brechungsindex eines Materials des Objekts 10 resultierenden Reflexionskoeffizienten multipliziert. Die so erhaltenen Komponenten des reflektierten Lichts werden zusammengesetzt, und daraus die Polarisationsrichtung des reflektierten Lichts bestimmt. Damit kann die Analysepolarisation des Analysators 110 zumindest näherungsweise senkrecht zur Polarisationsrichtung des reflektierten Lichts eingestellt werden.

Für ein zumindest teilweises Unterdrücken von an der zweiten Oberfläche 14, also der Rückfläche des Objekts 10 reflektiertem Licht (siehe Figur 4) kann die Analysepolarisation ebenfalls rechnerisch bestimmt werden. Dazu wird das eingestrahlte polarisierte Licht in senkrecht und parallel polarisierte Komponenten in einer ersten Einfallsebene des Lichts, die der Einfallsebene der Brechung an der ersten Oberfläche 12 entspricht, zerlegt, sowie die Lichtintensität beider Komponenten mit jeweils einem aus einem ersten Einfallswinkel $\alpha$ und dem Brechungsindex des Materials des Objekts 10 resultierenden Transmissionskoeffizienten multipliziert.

Diese Komponenten werden in die senkrecht und parallel polarisierten Komponenten in einer zweiten Einfallsebene, die der Einfallsebene der Reflexion an der zweiten Oberfläche 14 entspricht, umgerechnet und darauf die Lichtintensität beider Komponenten mit jeweils einem Reflexionskoeffizienten, der aus dem sich aus der Brechung an der ersten Oberfläche 12 sowie der zweiten Oberfläche 14 ergebenden Einfallswinkel $\gamma$ und dem Brechungsindex des Materials des Objekts 10 und/oder einer Halterung 104 resultiert, multipliziert. Danach werden diese Komponenten in die senkrecht und parallel polarisierten Komponenten in einer dritten Einfallsebene, die der Einfallsebene der zweiten Brechung an der ersten Oberfläche 12 entspricht, umgerechnet und die Lichtintensität beider Komponenten mit jeweils einem zweiten Transmissionskoeffizienten, der aus dem sich aus der Reflexion an der zweiten Oberfläche 14 sowie der ersten Oberfläche 14 ergebenden Einfallswinkel $\delta$ und dem Brechungsindex des Materials des Objekts 10 resultiert, multipliziert. Darauf werden die so erhaltenen Komponenten des gebrochenen Lichts zusammengesetzt, daraus die Polarisationsrichtung des durch die erste Oberfläche 12 zum zweiten Mal gebrochenen Lichts bestimmt und damit die Analysepolarisation des Analysators 110 zumindest näherungsweise senkrecht oder zumindest näherungsweise parallel zur Polarisationsrichtung des durch die erste Oberfläche 12 zum zweiten Mal transmittierten Lichts eingestellt.

Alternativ kann die Lichtintensität von an der ersten oder zweiten Oberfläche 12, 14 reflektiertem Licht zumindest teilweise unterdrückt werden, indem die Stellung von Polarisator 108 und/oder Analysator 110 empirisch bestimmt wird. Dazu werden eine beliebige Stellung des Polarisators 108 und eine beliebige Stellung des Analysators 110 eingestellt, und damit die Intensitätsverteilungen 22, 23 des an der ersten und an der zweiten Oberfläche 12, 14 reflektierten Lichts gemessen. Der Kontrast zwischen dem an der ersten Oberfläche 12 reflektierten Licht und dem an der zweiten Oberfläche 14 reflektierten Licht wird gemessen. Danach werden die Stellungen von Polarisator 108 und/oder Analysator 110 iterativ verstellt, bis ein vorgegebener Kontrast zwischen dem an der ersten Oberfläche 12 reflektierten Licht und dem an der zweiten Oberfläche 14 reflektierten Licht erreicht ist oder ein Grenzwert für die Intensität des unerwünschten Lichts erreicht oder unterschritten wird.

Figur 10 zeigt ein Flussdiagramm des Verfahrens zum Bestimmen von Oberflächendaten 16, 18 und/oder Messdaten einer Oberfläche 12, 14 eines zumindest teilweise transparenten Objekts 10 mit diskreten Musterelementen nach einem Ausführungsbeispiel der Erfindung. Das eingestrahlte Licht strahlt diskrete Musterelemente auf die ersten und zweiten Oberflächen 12, 14 des Objekts 10. In Schritt S210 wird die Position wenigstens eines reflektierten Musterelements in der von der Aufnahmeeinrichtung 102 empfangenen Intensitätsverteilung 22, 23 detektiert, während in Schritt S220 das reflektierte Musterelement zu der Oberfläche 12, 14, an der die Reflexion erfolgt ist, zugeordnet wird. In Schritt S230 wird die Position des Musterelements auf der Beleuchtungseinrichtung 101 und der Position des reflektierten Musterelements in der gemessenen Intensitätsverteilung 22, 23 zur Bestimmung von Oberflächendaten 16, 18 zu einer der Oberflächen 12, 14 verwendet. Bei der Zuordnung des zumindest einen Musterelements zu der Oberfläche 12 oder 14, an der die Reflexion erfolgt ist, kann zweckmäßigerweise die Lichtintensität des jeweiligen reflektierten Musterelements mit einem vorgegebenen oder aus der gemessenen Intensitätsverteilung 22, 23 ermittelten Schwellwert verglichen werden. Auch kann bei der Zuordnung des zumindest einen Musterlements zu der Oberfläche 12, 14, an der die Reflexion erfolgt ist, auf Basis der gemessenen Intensitätsverteilung 22, 23 die Polarisation des jeweiligen reflektierten Musterelements zumindest näherungsweise ermittelt werden. Die Polarisation eines Reflexes kann dabei vorteilhaft durch zwei Messungen mit zueinander orthogonalen Stellungen des Analysators 108 bestimmt werden.

Figur 11 zeigt ein Flussdiagramm des Verfahrens zum Bestimmen von Oberflächendaten 16, 18 und/oder Messdaten einer Oberfläche 12, 14 eines zumindest teilweise transparenten Objekts 10 mit flächigen Mustern nach einem weiteren Ausführungsbeispiel der Erfindung. Das eingestrahlte Licht strahlt flächige Muster, insbesondere Linien, Balken, beispielsweise mit konstantem oder sinusförmigem Intensitätsverlauf oder eine kontinuierliche Intensitätsverteilung, auf die ersten und zweiten Oberflächen 12, 14 des Objekts 10. In Schritt S310 wird die Lichtintensität, die durch Reflexion an der zumindest einen Oberfläche 12, 14 erzeugt und von der Aufnahmeeinrichtung 102 empfangen wird, für zumindest einen Punkt in der gemessenen Intensitätsverteilung 22, 23 detektiert, während in Schritt S320 der Position auf der Beleuchtungseinrichtung 101, von der das Licht stammt, das durch Reflexion an der Oberfläche 12, 14 in den Punkt der gemessenen Intensitätsverteilung 22, 23 abgebildet wird, der entsprechende Punkt zugeordnet wird. In Schritt S330 schließlich wird die Position des Punktes in der gemessenen Intensitätsverteilung 22, 23 und der zugeordneten Position auf der Beleuchtungseinrichtung 101 zur Bestimmung von Oberflächendaten der zugeordneten Oberfläche 12, 14 verwendet. Bei der Zuordnung der Position des zumindest einen Punktes auf der Beleuchtungseinrichtung 101 auf Basis der gemessenen Intensitätsverteilung 22, 23 kann zweckmäßigerweise die Polarisation des jeweiligen reflektierten Punktes zumindest näherungsweise ermittelt werden.

Figur 12 zeigt weiter ein Flussdiagramm für ein Ausführungsbeispiel des erfindungsgemäßen Verfahrens, bei dem Messungen mit zwei Analysatorstellungen durchgeführt werden. Solche Messungen können beispielsweise mit diskreten Musterelementen durchgeführt werden. Das eingestrahlte Licht strahlt diskrete Musterelemente auf die ersten und zweiten Oberflächen 12, 14 des Objekts 10. In Schritt S410 wird eine erste Messung mit einer Stellung von Analysator 108 und Polarisator 110 derart aufgenommen, dass die Reflexe der Vorderfläche 12 des Objekts 10 geschwächt werden. Sodann werden in Schritt S420 Musterelemente in der ersten Bildaufnahme selektiert und die Musterelemente, deren Intensität einen ersten Schwellwert überschreitet, zur Menge der rückflächigen Messreflexe zugeordnet. Diese Menge entspricht der Menge der in Figur 7 schematisch dargestellten Musterelemente. In Schritt S430 wird eine zweite Messung nach Drehen der Polarisationsebene des Analysators 110, vorzugsweise um 90° bzw. nach einem erfindungsgemäß zuvor ermittelten Winkel, durchgeführt. In Schritt S440 werden Musterelemente in der zweiten Bildaufnahme selektiert und die Musterelemente, deren Intensität einen zweiten Schwellwert überschreitet zur Menge aller Messreflexe zugeordnet. Diese Menge entspricht der Menge aller in Figur 6 schematisch dargestellten Musterelemente. In Schritt S450 werden die Elemente der Menge der rückflächigen Messreflexe aus der Menge aller Messreflexe herausgenommen und die verbleibenden Elemente zur Vorderfläche zugeordnet. Diese Menge entspricht der Menge der in Figur 8 schematisch dargestellten Musterelemente. So können die vorderflächigen Reflexe durch Ausschluss der rückflächigen Reflexe festgestellt werden. Dieses Verfahren ist besonders dann geeignet, wenn eine Unterdrückung der rückseitigen Reflexe auf Grund der Geometrie oder der Materialeigenschaften des Objekts 10 schwierig ist.

**Patentansprüche**

1. Verfahren zum Bestimmen von Oberflächendaten (16, 18) und/oder Messdaten einer Oberfläche (12, 14) mit einer optisch wirksamen ersten Oberfläche (12) und/oder einer gegenüberliegenden optisch wirksamen zweiten Oberfläche (14) eines zumindest teilweise transparenten Objekts (10), wobei die Oberflächen (12, 14) eine Vorderfläche des Objekts (10) und/oder eine Rückfläche des Objekts (10) und/oder eine oder mehrere Grenzflächen im Objekt (10) aufweisen, **gekennzeichnet durch**

   - Einstrahlen von polarisiertem Licht mit einer Einstrahlpolarisation wenigstens einer Beleuchtungseinrichtung (101) auf einen zu untersuchenden Analysebereich (34) des Objekts (10), wobei das Licht zur Einstellung der Einstrahlpolarisation durch einen der Beleuchtungseinrichtung (101) zugeordneten oder in diese integrierten Polarisator (108) geleitet wird,
   - Empfangen von an der ersten und/oder an der zweiten Oberfläche (12, 14) des Objekts (10) reflektiertem Licht mit einer Analysepolarisation mittels wenigstens einer Aufnahmeeinrichtung (102), wobei das Licht durch einen der Aufnahmeeinrichtung (102) zugeordneten oder in diese integrierten Analysator (110) geleitet wird, der als Polarisator zur Analyse des reflektierten Lichts verwendet wird,
   - zumindest teilweises Unterdrücken einer von der ersten oder zweiten Oberfläche (12, 14) des Objekts (10) reflektierten, von der Aufnahmeeinrichtung (102) empfangenen unerwünschten Lichtintensität durch Einstellen der Einstrahlpolarisation des Polarisators (108) und/oder der Analysepolarisation des Analysators (110), wobei das Einstellen ein gezieltes Schwächen der Reflexe der ersten Oberfläche (12) oder der zweiten Oberfläche (14) des Objekts (10) aufweist,
   - Messen einer Intensitätsverteilung (22, 23) oder einer Wellenfront (24, 25) des mit der Analysepolarisation empfangenen Lichts, um die Oberflächendaten (16, 18) und/oder Messdaten der Oberfläche (12, 14) im Analysebereich (34) zu ermitteln, und daraus Bestimmen der Oberflächendaten (16, 18) und/oder Messdaten der Oberfläche (12, 14) zu der ersten und/oder zweiten Oberfläche (12, 14),

   wobei die Oberflächendaten (16, 18) und/oder Messdaten Höhendaten und/oder Neigungsdaten und/oder Krümmungsdaten der Oberfläche (12, 14) aufweisen, und wobei ein vorgegebener oder ein maximal zu erzielender Kontrast zwischen dem an der ersten Oberfläche (12) reflektierten Licht und dem an der zweiten Oberfläche (14) reflektierten Licht erreicht wird oder ein Grenzwert für die Intensität des unerwünschten Lichts erreicht oder unterschritten wird, indem eine rechnerische Festlegung der Analysatorstellung erfolgt oder die Stellungen von Polarisator und/oder Analysator iterativ verstellt werden.

2. Verfahren nach Anspruch 1, **dadurch gekennzeichnet, dass** im Analysebereich (34) eine Abweichung der Oberflächendaten (16, 18) von Solldaten zu Oberflächendaten (16, 18) und/oder eine Abweichung der Messdaten einer Oberfläche (12, 14) von Solldaten zu Messdaten der Oberfläche (12, 14) bestimmt wird.

3. Verfahren nach Anspruch 1 oder 2, **dadurch gekennzeichnet, dass** wobei die Einstrahlpolarisation und/oder die Analysepolarisation derart gewählt werden, dass in der gemessenen Intensitätsverteilung (22, 23) die unerwünschte Lichtintensität dem von der Aufnahmeeinrichtung (102) empfangenen Licht entspricht, das zu der Analysepolarisation verschieden polarisiert ist, und/oder eine erwünschte Lichtintensität dem von der Aufnahmeeinrichtung (102) empfangenen Licht entspricht, das gleich der Analysepolarisation polarisiert ist, wobei der detektierte Anteil der erwünschten Lichtintensität größer ist als der detektierte Anteil der unerwünschten Lichtintensität.

4. Verfahren nach einem der vorhergehenden Ansprüche, **dadurch gekennzeichnet, dass** die Einstrahlpolarisation senkrecht oder parallel polarisiert in Bezug auf eine Einfallsebene ist, die durch das auf das Objekt (10) auftreffende Licht und das von der Aufnahmeeinrichtung (102) empfangene Licht aufgespannt wird, und/oder dass die Einstrahlpolarisation und die Analysepolarisation zueinander verschieden ausgerichtet werden.

5. Verfahren nach einem der vorhergehenden Ansprüche, **dadurch gekennzeichnet, dass** mehrere Beleuchtungseinrichtungen (101) und/oder mehrere Aufnahmeeinrichtungen (102) parallel eingesetzt werden.

6. Verfahren nach einem der vorhergehenden Ansprüche, **dadurch gekennzeichnet, dass** das eingestrahlte Licht diskrete Musterelemente auf die erste und zweite Oberfläche (12, 14) des Objekts (10) einstrahlt und wobei das Bestimmen der Oberflächendaten (16, 18) und/oder Messdaten im Analysebereich (34) einer der beiden Oberflächen (12, 14) des Objekts (10) aus der gemessenen Intensitätsverteilung (22, 23) umfasst

   - Detektieren der Position wenigstens eines reflektierten Musterelements in der von der Aufnahmeeinrichtung (102) empfangenen Intensitätsverteilung (22, 23),
   - Zuordnen des reflektierten Musterelements zu der Oberfläche (12, 14), an der die Reflexion erfolgt ist,
   - Verwenden der Position des Musterelements auf der Beleuchtungseinrichtung (101) und der Position des reflektierten Musterelements in der gemessenen Intensitätsverteilung (22, 23) zur Bestimmung der Oberflächendaten (16, 18) und/oder Messdaten.

7. Verfahren nach Anspruch 6, **dadurch gekennzeichnet, dass** bei der Zuordnung des zumindest einen Musterelements zu der Oberfläche (12, 14), an der die Reflexion erfolgt ist, die Lichtintensität des jeweiligen reflektierten Musterelements mit einem vorgegebenen oder aus der Intensitätsverteilung (22, 23) ermittelten Schwellwert verglichen wird, oder,
dass bei der Zuordnung des zumindest einen Musterelements zu der Oberfläche (12, 14), an der die Reflexion erfolgt ist, auf Basis der gemessenen Intensitätsverteilung (22, 23) die Polarisation des jeweiligen reflektierten Musterelements zumindest näherungsweise ermittelt wird.

8. Verfahren nach einem der Ansprüche 1 bis 5, **dadurch gekennzeichnet, dass** das eingestrahlte Licht flächige oder linienförmige Muster, auf die erste und zweite Oberfläche (12, 14) des Objekts (10) einstrahlt und wobei das Bestimmen der Oberflächendaten (16, 18) und/oder Messdaten im Analysebereich (34) einer der beiden Oberflächen (12, 14) des Objekts (10) aus der gemessenen Intensitätsverteilung (22, 23) umfasst

   - Bestimmen der Lichtintensität, die durch Reflexion an der zumindest einen Oberfläche (12, 14) erzeugt und von der Aufnahmeeinrichtung

(102) empfangen wird, für zumindest einen Punkt in der gemessenen Intensitätsverteilung (22, 23),
   - Zuordnen des Punktes zu der Position auf der Beleuchtungseinrichtung (101), von der das Licht stammt, das durch Reflexion an der Oberfläche (12, 14) in den Punkt der gemessenen Intensitätsverteilung (22, 23) abgebildet wird,
   - Verwenden der Position des Punktes in der gemessenen Intensitätsverteilung (22, 23) und der zugeordneten Position auf der Beleuchtungseinrichtung (101) zur Bestimmung der Oberflächendaten (16, 18) und/oder Messdaten einer Oberfläche (12, 14).

9. Verfahren nach Anspruch 8, **dadurch gekennzeichnet, dass** bei der Zuordnung der Position des zumindest einen Punktes auf der Beleuchtungseinrichtung (101) auf Basis der gemessenen Intensitätsverteilung (22, 23) die Polarisation des jeweiligen reflektierten Punktes zumindest näherungsweise ermittelt wird.

10. Verfahren nach einem der vorhergehenden Ansprüche, **dadurch gekennzeichnet, dass** für ein zumindest teilweises Unterdrücken oder Hervorheben von an der ersten Oberfläche (12) reflektiertem Licht die Analysepolarisation rechnerisch bestimmt wird, umfassend

   - Zerlegen des eingestrahlten polarisierten Lichts in senkrecht und parallel polarisierte Komponenten in einer Einfallsebene,
   - Multiplizieren der Lichtintensität beider Komponenten mit jeweils einem aus einem Einfallswinkel ($\alpha$) und einem Brechungsindex eines Materials des Objekts (10) resultierenden Reflexionskoeffizienten,
   - Zusammensetzen der so erhaltenen Komponenten des reflektierten Lichts,
   - Bestimmen der Polarisationsrichtung des reflektierten Lichts,
   - Einstellen der Analysepolarisation des Analysators (110) zumindest näherungsweise senkrecht, oder zumindest näherungsweise parallel zur Polarisationsrichtung des reflektierten Lichts.

11. Verfahren nach einem der vorhergehenden Ansprüche, **dadurch gekennzeichnet, dass** für ein zumindest teilweises Unterdrücken oder Hervorheben von an der zweiten Oberfläche (14) reflektiertem Licht die Analysepolarisation rechnerisch bestimmt wird, umfassend

   - Zerlegen des eingestrahlten polarisierten Lichts in senkrecht und parallel polarisierte Komponenten in einer ersten Einfallsebene des Lichts auf die erste Oberfläche (12),

- Multiplizieren der Lichtintensität beider Komponenten mit jeweils einem aus einem ersten Einfallswinkel ($\alpha$) und dem Brechungsindex des Materials des Objekts (10) resultierenden Transmissionskoeffizienten,

- Umrechnen dieser Komponenten in senkrecht und parallel polarisierte Komponenten in einer zweiten Einfallsebene der Reflexion an der zweiten Oberfläche (14),

- Multiplizieren der Lichtintensität beider Komponenten mit einem aus einem zweiten Einfallswinkel ($\gamma$) und dem Brechungsindex des Materials des Objekts (10) und/oder einer Halterung (104) resultierenden Reflexionskoeffizienten,

- Umrechnen dieser Komponenten in senkrecht und parallel polarisierte Komponenten in eine dritte Einfallsebene der zweiten Brechung an der ersten Oberfläche (12),

- Multiplizieren der Lichtintensität beider Komponenten mit jeweils einem aus einem dritten Einfallswinkel ($\delta$) und dem Brechungsindex des Materials des Objekts (10) resultierenden zweiten Transmissionskoeffizienten,

- Zusammensetzen der so erhaltenen Komponenten des transmittierten Lichts,

- Bestimmen einer Polarisationsrichtung des an der ersten Oberfläche (12) zum zweiten Mal gebrochenen Lichts,

- Einstellen der Analysepolarisation des Analysators (110) zumindest näherungsweise senkrecht oder zumindest näherungsweise parallel zur Polarisationsrichtung des durch die erste Oberfläche (12) zum zweiten Mal gebrochenen Lichts.

12. Verfahren nach einem der Ansprüche 1 bis 9, **dadurch gekennzeichnet, dass** für ein zumindest teilweises Unterdrücken der Lichtintensität von an der ersten oder zweiten Oberfläche (12, 14) reflektiertem Licht die Stellung von Polarisator (108) und/oder Analysator (110) empirisch bestimmt wird, umfassend

- Einstellen einer beliebigen Stellung des Polarisators (108) und einer beliebigen Stellung des Analysators (110),

- Messen der Intensitätsverteilungen (22, 23) des an der ersten und an der zweiten Oberfläche (12, 14) reflektierten Lichts,

- Bewerten des Kontrasts zwischen dem an der ersten Oberfläche (12) reflektierten Licht und dem an der zweiten Oberfläche (14) reflektierten Licht,

- Iteratives Verstellen der Stellungen von Polarisator (108) und/oder Analysator (110), bis ein vorgegebener oder maximal zu erzielender Kontrast zwischen dem an der ersten Oberfläche (12) reflektierten Licht und dem an der zweiten Oberfläche (14) reflektierten Licht erreicht ist oder ein Grenzwert für die Intensität der unerwünschten Lichtintensität erreicht oder unterschritten wird.

13. Vorrichtung (100) zum Ausführen eines Verfahrens nach Anspruch 1 zum Bestimmen von Oberflächendaten (16, 18) und/oder Messdaten einer Oberfläche (12, 14) mit einer optisch wirksamen ersten Oberfläche (12) und/oder einer gegenüberliegenden optisch wirksamen zweiten Oberfläche (14) eines zumindest teilweise transparenten Objekts (10), wobei die Oberfläche (12, 14) eine Vorderfläche des Objekts (10) und/oder eine Rückfläche des Objekts (10) und/oder eine oder mehrere Grenzflächen im Objekt (10) aufweisen, wobei die Oberflächendaten (16, 18) und/oder Messdaten Höhendaten und/oder Neigungsdaten und/oder Krümmungsdaten der Oberfläche (12, 14) aufweisen, umfassend

- wenigstens eine Beleuchtungseinrichtung (101) mit einem in einer optischen Achse (106) nach oder als Teil der Beleuchtungseinrichtung (101) angeordneten Polarisator (108) mit einer Einstrahlpolarisation,

- wenigstens eine Aufnahmeeinrichtung (102) mit einem in einer optischen Achse (107) vor oder als Teil der Aufnahmeeinrichtung (102) angeordneten Analysator (110) mit einer Analysepolarisation,

- eine Halterung (104) für das Objekt (10).

14. Vorrichtung nach Anspruch 13, wobei die Beleuchtungseinrichtung (101) mit dem Polarisator (108) derart eingerichtet ist, diskrete Musterelemente und/oder flächige oder linienförmige Muster von der Beleuchtungseinrichtung (101) durch den Polarisator (108) auf das Objekt (10) einzustrahlen und die Aufnahmeeinrichtung (102) mit dem Analysator (110) derart eingerichtet ist, dass die diskreten Musterelemente und/oder flächigen oder linienförmigen Muster von der Aufnahmeeinrichtung (102) durch den Analysator (110) empfangbar sind, oder wobei die Beleuchtungseinrichtung (101) mit dem Polarisator (108) derart eingerichtet ist, Strahlung mit einer vorgegebenen Einstrahlpolarisation auf das Objekt (10) einzustrahlen und die Aufnahmeeinrichtung (102) mit dem Analysator (110) derart eingerichtet ist, eine Wellenfront (24, 25) einer durch den Analysator (110) bestimmten Polarisationskomponente zu empfangen, wobei die eingestrahlte Strahlung eine vorgegebene Wellenfront (21) aufweist und die Aufnahmeeinrichtung (102) dazu ausgebildet ist, die Form der Wellenfront (24, 25) zu analysieren und dabei nach dem Hartmann-Prinzip, Shack-Hartmann-Prinzip, dem Moire-Prinzip oder interferometrisch arbeitet.

**15.** Vorrichtung nach einem der Ansprüche 13 bis 14, umfassend eine Datenverarbeitungseinrichtung (120), wobei die Datenverarbeitungseinrichtung (120) dazu eingerichtet ist, eine Auswertung der mit der Aufnahmeeinrichtung (102) empfangenen reflektierten Lichtstrahlung zu steuern.

**16.** Vorrichtung nach Anspruch 15, wobei die Datenverarbeitungseinrichtung (120) oder eine weitere Datenverarbeitungseinrichtung dazu eingerichtet ist, eine Mustererzeugung der Beleuchtungseinrichtung (101) zu steuern.

**17.** Computerprogrammprodukt zum Bestimmen von Oberflächendaten (16, 18) und/oder Messdaten einer Oberfläche (12, 14) eines zumindest teilweise transparenten Objekts (10), umfassend ein computerlesbares Speichermedium, welches einen Programmcode beinhaltet, der dazu ausgebildet ist, ein Verfahren nach einem der Ansprüche 1 bis 12 auszuführen, wenn der Programmcode auf einer Datenverarbeitungseinrichtung (120) ausgeführt wird.

**Claims**

**1.** A method for determining surface data (16, 18) and/or measuring data of a surface (12, 14) having an optically effective first surface (12) and/or an opposite optically effective second surface (14) of an at least partially transparent object (10), the surfaces (12, 14) comprising a front surface of the object (10) and/or a rear surface of the object (10) and/or one or more interfaces in the object (10), **characterized by**

- irradiating polarized light with an irradiation polarization of at least one illumination device (101) onto an analysis area (34) of the object (10) to be examined, wherein the light is guided through a polarizer (108) associated with or integrated in the illumination device (101) for adjusting the irradiation polarization,
- receiving light reflected at the first and/or second surface (12, 14) with an analysis polarization by means of at least one receiving device (102), wherein the light is passed through an analyzer (110) associated with or integrated in the receiving device (102), which is used as a polarizer for analyzing the reflected light,
- at least partially suppressing an undesired light intensity reflected from the first or second surface (12, 14) of the object (10) received by the receiving device (102) by adjusting the irradiation polarization of the polarizer (108) and/or the analysis polarization of the analyzer (110), wherein the adjusting comprises selectively weakening the reflections of the first surface (12) or the second surface (14) of the object (10),
- measuring an intensity distribution (22, 23) or a wavefront (24, 25) of the light received with the analysis polarization to determine the surface data (16, 18) and/or measurement data of the surface (12, 14) in the analysis region (34), and determining therefrom the surface data (16, 18) and/or measurement data of the surface (12, 14) to the first and/or second surface (12, 14),

wherein the surface data (16, 18) and/or measurement data comprises elevation data and/or slope data and/or curvature data of the surface (12, 14), and wherein a predetermined contrast or a maximum contrast to be achieved between the light reflected at the first surface (12) and the light reflected at the second surface (14) is reached or a limit value for the intensity of the unwanted light is reached or undershot, in that the position of the analyzer is determined by calculation or the positions of the polarizer and/or analyzer are adjusted iteratively.

**2.** Method according to claim 1, **characterized in that** in the analysis area (34) a deviation of the surface data (16, 18) from nominal data to surface data (16, 18) and/or a deviation of the measurement data of a surface (12, 14) from nominal data to measurement data of the surface (12, 14) is determined.

**3.** Method according to claim 1 or 2, **characterized in that** the irradiation polarization and/or the analysis polarization are selected in such a way that in the measured intensity distribution (22, 23) the unwanted light intensity corresponds to the light received by the receiving device (102), polarized differently from the analysis polarization, and/or a desired light intensity corresponds to the light received by the receiving device (102) polarized equal to the analysis polarization, wherein the detected portion of the desired light intensity is greater than the detected portion of the undesired light intensity.

**4.** Method according to one of the preceding claims, **characterized in that** the incident polarization is polarized perpendicularly or parallel with respect to a plane of incidence spanned by the light incident on the object (10) and the light received by the recording device (102) and/or **in that** the incident polarization and the analysis polarization are aligned differently with respect to one another, in particular are aligned orthogonally with respect to one another.

**5.** Method according to one of the preceding claims, **characterized in that** a plurality of illumination devices (101) and/or a plurality of recording devices (102) are used in parallel.

6. Method according to any one of the preceding claims, **characterized in that** the irradiated light irradiates discrete pattern elements onto the first and second surfaces (12, 14) of the object (10) and wherein determining the surface data (16, 18) and/or measurement data in the analysis area (34) of one of the two surfaces (12, 14) of the object (10) from the measured intensity distribution (22, 23) comprises

- detecting the position of at least one reflected pattern element in the intensity distribution (22, 23) received from the receiving device (102),
- associating the reflected pattern element with the surface (12, 14) on which the reflection occurred,
- using the position of the pattern element on the illumination means (101) and the position of the reflected pattern element in the measured intensity distribution (22, 23) to determine the surface data (16, 18) and/or measurement data.

7. Method according to claim 6, **characterized in that** during the assignment of the at least one pattern element to the surface (12, 14) at which the reflection has occurred, the light intensity of the respective reflected pattern element is compared with a predetermined threshold value or a threshold value determined from the intensity distribution (22, 23), or, **in that**, when the at least one pattern element is assigned to the surface (12, 14) at which the reflection has occurred, the polarization of the respective reflected pattern element is determined at least approximately on the basis of the measured intensity distribution (22, 23).

8. Method according to one of claims 1 to 5, **characterized in that** the irradiated light irradiates planar or linear patterns, in particular lines, bars or a continuous intensity distribution, onto the first and second surfaces (12, 14) of the object (10), and wherein the determination of the surface data (16, 18) and/or measurement data in the analysis area (34) of one of the two surfaces (12, 14) of the object (10) from the measured intensity distribution (22, 23) comprises

- determining the light intensity generated by reflection from the at least one surface (12, 14) and received by the receiving device (102) for at least one point in the measured intensity distribution (22, 23),
- associating the point with the position on the illumination means (101) from which the light imaged by reflection from the surface (12, 14) is imaged into the point of the measured intensity distribution (22, 23),
- using the position of the point in the measured intensity distribution (22, 23) and the associated position on the illumination device (101) to determine the surface data (16, 18) and/or measurement data of a surface (12, 14).

9. Method according to claim 8, **characterized in that**, when assigning the position of the at least one point on the illumination device (101) on the basis of the measured intensity distribution (22, 23), the polarization of the respective reflected point is determined at least approximately.

10. Method according to one of the preceding claims, **characterized in that** for an at least partial suppression or highlighting of light reflected at the first surface (12) the analysis polarization is determined computationally, comprising

- splitting the incident polarized light into perpendicularly and parallel polarized components in a plane of incidence,
- multiplying the light intensity of both components by a respective reflection coefficient resulting from an angle of incidence ($\alpha$) and a refractive index of a material of the object (10),
- composing the components of the reflected light thus obtained,
- determining the polarization direction of the reflected light,
- adjusting the analysis polarization of the analyzer (110) at least approximately perpendicular, or at least approximately parallel to the polarization direction of the reflected light.

11. Method according to any one of the preceding claims, **characterized in that**, for at least partial suppression or highlighting of light reflected at the second surface (14), the analysis polarization is determined computationally, comprising

- decomposing the incident polarized light into perpendicular and parallel polarized components in a first plane of incidence of the light on the first surface (12),
- multiplying the light intensity of both components by a respective transmission coefficient resulting from a first angle of incidence ($\alpha$) and the refractive index of the material of the object (10),
- converting these components into perpendicularly and parallel polarized components in a second plane of incidence of the reflection at the second surface (14),
- multiplying the light intensity of both components by a reflection coefficient resulting from a second angle of incidence ($\gamma$) and the refractive

index of the material of the object (10) and/or a support (104),

- converting these components into perpendicularly and parallel polarized components in a third plane of incidence of the second refraction at the first surface (12),

- multiplying the light intensity of both components by a respective second transmission coefficient resulting from a third angle of incidence (δ) and the refractive index of the material of the object (10),

- composing the components of the transmitted light thus obtained,

- determining a polarization direction of the light refracted at the first surface (12) for the second time,

- adjusting the analysis polarization of the analyzer (110) at least approximately perpendicular or at least approximately parallel to the polarization direction of the light refracted by the first surface (12) for the second time.

12. Method according to any one of claims 1 to 9, **characterized in that**, for at least partial suppression of the light intensity of light reflected at the first or second surface (12, 14), the position of polarizer (108) and/or analyzer (110) is empirically determined, comprising

- setting any position of the polarizer (108) and any position of the analyzer (110),

- measuring the intensity distributions (22, 23) of the light reflected at the first and at the second surface (12, 14),

- evaluating the contrast between the light reflected at the first surface (12) and the light reflected at the second surface (14),

- iteratively adjusting the positions of the polarizer (108) and/or analyzer (110) until a predetermined or maximum contrast to be achieved between the light reflected at the first surface (12) and the light reflected at the second surface (14) is reached or a limit value for the intensity of the undesired light intensity is reached or not reached.

13. Apparatus (100) for carrying out a method according to claim 1 for determining surface data (16, 18) and/or measurement data of a surface (12, 14) having an optically effective first surface (12) and/or an opposite optically effective second surface (14) of an at least partially transparent object (10), wherein the surface (12, 14) comprises a front surface of the object (10) and/or a rear surface of the object (10) and/or one or more interfaces in the object (10), wherein the surface data (16, 18) and/or measurement data comprises elevation data and/or slope data and/or curvature data of the surface (12, 14), comprising

- at least one illuminating device (101) having a polarizer (108) with a single beam polarization arranged in an optical axis (106) after or as part of the illuminating device (101),

- at least one recording device (102) with an analyzer (110) with an analysis polarization arranged in an optical axis (107) upstream of or as part of the recording device (102),

- a holder (104) for the object (10).

14. Device according to claim 13, wherein the illumination device (101) with the polarizer (108) is set up in such a way that discrete pattern elements and/or two-dimensional or linear patterns are irradiated from the illumination device (101) through the polarizer (108) onto the object (10), and the recording device (102) with the analyzer (110) is set up in such a way that the discrete pattern elements and/or two-dimensional or linear patterns can be received by the recording device (102) or the analyzer (110), or wherein the illumination device (101) with the polarizer (108) is set up to irradiate radiation with a predetermined irradiation polarization onto the object (10) and the recording device (102) with the analyzer (110) is set up to receive a wavefront (24, 25) of a polarization component determined by the analyzer (110), wherein the radiated radiation has a predetermined wavefront (21) and the receiving device (102) is arranged to analyze the shape of the wavefront (24, 25) and thereby operates according to the Hartmann principle, Shack-Hartmann principle, the Moire principle or interferometrically.

15. Apparatus according to any one of claims 13 to 14, comprising a data processing device (120), wherein the data processing device (120) controls an analysis of the reflected light radiation received with the receiving device (102).

16. Apparatus according to claim 15, wherein the data processing means (120) or a further data processing means is adapted to control a pattern generation of the illumination means (101).

17. Computer program product for determining surface data (16, 18) and/or measurement data of a surface (12, 14) of an at least partially transparent object (10), comprising a computer-readable storage medium containing program code adapted to execute a method according to any one of claims 1 to 12 when the program code is executed on a data processing device (120).

**Revendications**

1. Procédé pour déterminer des données de surface (16, 18) et/ou des données de mesure d'une surface (12, 14) avec une première surface optiquement efficace (12) et/ou une deuxième surface optiquement efficace opposée (14) d'un objet au moins partiellement transparent (10), les surfaces (12, 14) comprenant une surface avant de l'objet (10) et/ou une surface arrière de l'objet (10) et/ou une ou plusieurs surfaces de délimitation dans l'objet (10), **caractérisé par**

   - irradier une lumière polarisée avec une polarisation d'irradiation d'au moins un dispositif d'éclairage (101) sur une région d'analyse (34) de l'objet (10) à examiner, la lumière étant guidée à travers un polariseur (108) associé au dispositif d'éclairage (101) ou intégré dans celui-ci afin d'ajuster la polarisation d'irradiation,
   - recevoir la lumière réfléchie sur la première et/ou la deuxième surface (12, 14) avec une polarisation d'analyse au moyen d'au moins un dispositif de réception (102), dans lequel la lumière est passée à travers un analyseur (110) associé ou intégré au dispositif de réception (102), qui est utilisé comme polariseur pour analyser la lumière réfléchie,
   - supprimer au moins partiellement une intensité lumineuse indésirable réfléchie par la première ou la deuxième surface (12, 14) de l'objet (10) reçu par le dispositif de réception (102) en ajustant la polarisation d'irradiation du polariseur (108) et/ou la polarisation d'analyse de l'analyseur (110), dans lequel l'ajustement comprend un affaiblissement ciblé des réflexions de la première surface (12) ou de la deuxième surface (14) de l'objet (10),
   - mesurer une distribution d'intensité (22, 23) ou un front d'onde (24, 25) de la lumière reçue avec la polarisation d'analyse pour déterminer les données de surface (16, 18) et/ou les données de mesure de la surface (12, 14) dans la région d'analyse (34), et déterminer à partir de là les données de surface (16, 18) et/ou les données de mesure de la surface (12, 14) à la première et/ou à la deuxième surface (12, 14),

      dans lequel les données de surface (16, 18) et/ou les données de mesure comprennent des données d'élévation et/ou des données de pente et/ou des données de courbure de la surface (12, 14), et dans lequel un contraste prédéterminé ou un contraste maximal à atteindre entre la lumière réfléchie sur la première surface (12) et la lumière réfléchie sur la deuxième surface (14) est atteint ou une valeur limite pour l'intensité de la lumière indésirable est atteinte ou sous-dépassée, en ce que la position de l'analyseur est déterminée par calcul ou les positions du polariseur et/ou de l'analyseur sont ajustées de manière itérative.

2. Procédé selon la revendication 1, **caractérisé en ce que** l'on détermine dans la zone d'analyse (34) un écart des données de surface (16, 18) par rapport aux données de consigne et/ou un écart des données de mesure d'une surface (12, 14) par rapport aux données de mesure de la surface (12, 14).

3. Procédé selon la revendication 1 ou 2, **caractérisé en ce que** la polarisation d'irradiation et/ou la polarisation d'analyse sont choisies de telle sorte que dans la distribution d'intensité mesurée (22, 23), l'intensité de la lumière indésirable correspond à la lumière reçue par le dispositif de réception (102), polarisée différemment de la polarisation d'analyse, et/ou une intensité lumineuse souhaitée correspond à la lumière reçue par le dispositif de réception (102) polarisée de la même manière que la polarisation d'analyse, dans lequel la proportion détectée de l'intensité lumineuse souhaitée est supérieure à la proportion détectée de l'intensité lumineuse non souhaitée.

4. Procédé selon l'une des revendications précédentes, **caractérisé en ce que** la polarisation incidente est polarisée perpendiculairement ou parallèlement par rapport à un plan d'incidence défini par la lumière incidente sur l'objet (10) et la lumière reçue par le dispositif récepteur (102) et/ou **en ce que** la polarisation incidente et la polarisation d'analyse sont alignées différemment l'une par rapport à l'autre, notamment sont alignées orthogonalement l'une par rapport à l'autre.

5. Procédé selon l'une des revendications précédentes, dans lequel une pluralité de dispositifs d'éclairage (101) et/ou une pluralité de dispositifs d'enregistrement (102) sont utilisés en parallèle.

6. Procédé selon l'une des revendications précédentes, **caractérisé en ce que** la lumière irradiée irradie des éléments de motifs discrets sur les première et deuxième surfaces (12, 14) de l'objet (10) et dans lequel la détermination des données de surface (16, 18) et/ou des données de mesure dans la zone d'analyse (34) de l'une des deux surfaces (12, 14) de l'objet (10) à partir de la distribution d'intensité mesurée (22, 23) comprend

      - détecter la position d'au moins un élément de motif réfléchi dans la distribution d'intensité (22, 23) reçue du dispositif de réception (102),

- associer l'élément de motif réfléchi à la surface (12, 14) sur laquelle la réflexion s'est produite,
- utiliser la position de l'élément de motif sur le moyen d'éclairage (101) et la position de l'élément de motif réfléchi dans la distribution d'intensité mesurée (22, 23) pour déterminer les données de surface (16, 18) et/ou les données de mesure.

7. Procédé selon la revendication 6, **caractérisé en ce que** pendant l'affectation de l'au moins un élément de motif à la surface (12, 14) sur laquelle la réflexion s'est produite, l'intensité lumineuse de l'élément de motif réfléchi respectif est comparée à une valeur seuil prédéterminée ou à une valeur seuil déterminée à partir de la distribution d'intensité (22, 23), ou, **en ce que**, lorsque l'au moins un élément de modèle est associé à la surface (12, 14) sur laquelle la réflexion a eu lieu, la polarisation de l'élément de modèle réfléchi respectif est déterminée au moins approximativement sur la base de la distribution d'intensité mesurée (22, 23).

8. Procédé selon l'une des revendications 1 à 5, **caractérisé en ce que** la lumière irradiée irradie des motifs planaires ou linéaires, en particulier des lignes, des barres ou une distribution d'intensité continue, sur les première et deuxième surfaces (12, 14) de l'objet (10), et dans lequel la détermination des données de surface (16, 18) et/ou des données de mesure dans la zone d'analyse (34) de l'une des deux surfaces (12, 14) de l'objet (10) à partir de la distribution d'intensité mesurée (22, 23) comprend

- déterminer, pour au moins un point dans la distribution d'intensité mesurée (22, 23), l'intensité lumineuse générée par la réflexion de la au moins une surface (12, 14) et reçue par le dispositif d'enregistrement (102),
- associer le point à la position sur le moyen d'éclairage (101) à partir de laquelle la lumière imagée par réflexion sur la surface (12, 14) est dérivée dans le point de la distribution d'intensité mesurée (22, 23),
- utiliser la position du point dans la distribution d'intensité mesurée (22, 23) et la position associée sur le dispositif d'éclairage (101) pour déterminer des données de surface (16, 18) et/ou des données de mesure d'une surface (12, 14).

9. Procédé selon la revendication 8, **caractérisé en ce que** lors de l'attribution de la position d'au moins un point sur le dispositif d'éclairage (101) sur la base de la distribution d'intensité mesurée (22, 23), la polarisation du point réfléchi respectif est déterminée au moins approximativement.

10. Procédé selon l'une des revendications précédentes, **caractérisé en ce que**, pour la suppression ou la mise en évidence au moins partielle de la lumière réfléchie sur la première surface (12), la polarisation d'analyse est déterminée par calcul, comprenant

- décomposer la lumière polarisée incidente en composantes polarisées perpendiculairement et parallèlement dans un plan d'incidence,
- multiplier l'intensité lumineuse des deux composantes par un coefficient de réflexion respectif résultant d'un angle d'incidence ($\alpha$) et d'un indice de réfraction d'un matériau de l'objet (10),
- composant les composantes ainsi obtenues de la lumière réfléchie,
- déterminer la direction de polarisation de la lumière réfléchie,
- ajuster la polarisation d'analyse de l'analyseur (110) au moins approximativement perpendiculaire, ou au moins approximativement parallèle, à la direction de polarisation de la lumière réfléchie.

11. Procédé selon l'une quelconque des revendications précédentes, **caractérisé en ce que**, pour la suppression ou la mise en évidence au moins partielle de la lumière réfléchie sur la deuxième surface (14), la polarisation d'analyse est déterminée par calcul, comprenant

- décomposer la lumière polarisée incidente en composantes polarisées perpendiculaires et parallèles dans un premier plan d'incidence de la lumière sur la première surface (12),
- multiplier l'intensité lumineuse des deux composantes par un coefficient de transmission respectif résultant d'un premier angle d'incidence ($\alpha$) et de l'indice de réfraction du matériau de l'objet (10),
- convertir ces composantes en composantes polarisées perpendiculairement et parallèlement dans un deuxième plan d'incidence de la réflexion sur la deuxième surface (14),
- multiplier l'intensité lumineuse des deux composantes par un coefficient de réflexion résultant d'un second angle d'incidence ($\gamma$) et de l'indice de réfraction du matériau de l'objet (10) et/ou d'un support (104),
- convertir ces composantes en composantes polarisées perpendiculairement et parallèlement dans un troisième plan d'incidence de la seconde réfraction sur la première surface (12),
- multiplier l'intensité lumineuse des deux composantes par un deuxième coefficient de transmission respectif résultant d'un troisième angle d'incidence ($\delta$) et de l'indice de réfraction du matériau de l'objet (10),
- composer les composantes de la lumière transmise ainsi obtenue,

- déterminer une direction de polarisation de la lumière réfractée à la première surface (12) pour le deuxième temps,
- ajuster la polarisation d'analyse de l'analyseur (110) au moins approximativement perpendiculaire ou au moins approximativement parallèle à la direction de polarisation de la lumière réfractée par la première surface (12) pour la deuxième fois.

12. Procédé selon l'une quelconque des revendications 1 à 9, **caractérisé en ce que**, pour la suppression au moins partielle de l'intensité lumineuse de la lumière réfléchie sur la première ou la deuxième surface (12, 14), la position du polariseur (108) et/ou de l'analyseur (110) est déterminée de manière empirique, comprenant

    - régler une position quelconque du polariseur (108) et une position quelconque de l'analyseur (110),
    - mesurer les distributions d'intensité (22, 23) de la lumière réfléchie par la première et deuxième surface (12, 14),
    - évaluer le contraste entre la lumière réfléchie par la première surface (12) et la lumière réfléchie par la deuxième surface (14),
    - ajuster de manière itérative les positions du polariseur (108) et/ou de l'analyseur (110) jusqu'à ce qu'un contraste prédéterminé ou maximal à atteindre entre la lumière réfléchie au niveau de la première surface (12) et la lumière réfléchie au niveau de la seconde surface (14) soit atteint ou qu'une valeur limite pour l'intensité de la lumière non désirée soit atteinte ou sous-dépassée.

13. Appareil (100) pour la mise en œuvre d'un procédé selon la revendication 1 pour déterminer des données de surface (16, 18) et/ou des données de mesure d'une surface (12, 14) ayant une première surface optiquement efficace (12) et/ou une deuxième surface optiquement efficace opposée (14) d'un objet au moins partiellement transparent (10), dans lequel la surface (12, 14) comprend une surface avant de l'objet (10) et/ou une surface arrière de l'objet (10) et/ou une ou plusieurs interfaces dans l'objet (10), où les données de surface (16, 18) et/ou les données de mesure comprennent des données d'élévation et/ou des données de pente et/ou des données de courbure de la surface (12, 14), comprenant

    - au moins un dispositif d'éclairage (101) avec un polariseur (108) avec une polarisation de faisceau unique disposé dans un axe optique (106) après ou comme partie du dispositif d'éclairage (101),
    - au moins un dispositif d'enregistrement (102) avec un analyseur (1 10) avec une polarisation d'analyse disposé dans un axe optique (107) en amont ou en tant que partie du dispositif d'enregistrement (102),
    - un support (104) pour l'objet (10).

14. Appareil selon la revendication 13, dans lequel le dispositif d'éclairage (101) avec le polariseur (108) est configuré de telle sorte que des éléments de motif discrets et/ou des motifs bidimensionnels ou linéaires sont irradiés à partir du dispositif d'éclairage (101) à travers le polariseur (108) sur l'objet (10) et le dispositif d'enregistrement (102) avec l'analyseur (110) est configuré de telle sorte que les éléments de motif discrets et/ou les motifs bidimensionnels ou linéaires peuvent être reçus par le dispositif d'enregistrement (102) ou l'analyseur (110), ou

dans lequel le dispositif d'éclairage (101) avec le polariseur (108) est configuré de telle sorte qu'un rayonnement avec une polarisation d'irradiation prédéterminée est irradié sur l'objet (10) et le dispositif d'enregistrement (102) avec l'analyseur (110) est configuré de telle sorte qu'un front d'onde (24, 25) d'une composante de polarisation déterminée par l'analyseur (110) est reçu, dans lequel le rayonnement a un front d'onde prédéterminé (21) et le dispositif de réception (102) est conçu pour analyser la forme du front d'onde (24, 25) et fonctionne ainsi selon le principe de Hartmann, le principe de Shack-Hartmann, le principe de Moiré ou par interférométrie.

15. Appareil selon l'une quelconque des revendications 13 à 14, comprenant un dispositif de traitement de données (120), dans lequel le dispositif de traitement de données (120) commande une analyse du rayonnement lumineux réfléchi reçu avec le dispositif de réception (102).

16. Appareil selon la revendication 15, dans lequel le moyen de traitement de données (120) ou un autre moyen de traitement de données est agencé pour commander la génération de motif du moyen d'éclairage (101).

17. Produit de programme informatique pour déterminer des données de surface (16, 18) et/ou des données de mesure d'une surface (12, 14) d'un objet au moins partiellement transparent (10), comprenant un support de stockage lisible par ordinateur contenant un code de programme adapté pour exécuter un procédé selon l'une quelconque des revendications 1 à 12 lorsque le code de programme est exécuté sur un dispositif de traitement de données (120).

Fig. 1

Fig. 2

Fig. 3

Fig. 4

EP 3 304 025 B1

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004020419 B3
- DE 10014964 C2
- EP 2799832 A2
- DE 102011078833 A1
- US 7688431 B1
- WO 2008098293 A1
- US 2009161114 A1
- US 2001001572 A1
- WO 2014019806 A1

**In der Beschreibung aufgeführte Nicht-Patentliteratur**

- **D. MALACARA.** Optical Shop Testing. Wiley Interscience, 1992
- Non Interferometric Wavefront Sensing, in Metrology of Optical Components and Systems. **H. GROSS ; B. DÖRBAND ; H. MÜLLER.** Handbook of Optical Systems. Wiley-VCH, 2012, vol. 5